# EUROPÄISCHE PATENTSCHRIFT

(11) **EP 3 057 025 B1**
(45) Veröffentlichungstag und Bekanntmachung des Hinweises auf die Patenterteilung: **17.06.2020**
(21) Anmeldenummer: 15156033.1
(22) Anmeldetag: 20.02.2015
(51) Int. Cl.: G06F 21/33, G06F 21/35, G06F 21/62, H04L 29/06

(54) **COMPUTERIMPLEMENTIERTES VERFAHREN ZUR ZUGRIFFSKONTROLLE**
COMPUTER-IMPLEMENTED METHOD FOR CONTROLLING ACCESS
PROCÉDÉ MIS EN OEUVRE PAR ORDINATEUR DESTINÉ AU CONTRÔLE D'ACCÈS

(30) Priorität: 10.02.2015 DE 102015202308
(43) Veröffentlichungstag der Anmeldung: 17.08.2016
(73) Patentinhaber: Bundesdruckerei GmbH, 10958 Berlin (DE)
(72) Erfinder: Morgner, Frank, 15537 Grünheide (DE); Bastian, Paul, 10243 Berlin (DE)
(74) Vertreter: Richardt Patentanwälte PartG mbB

(56) Entgegenhaltungen:
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/EN/Publication s/TechnicalGuidelines/TR03110/BSITR03110.h tml [gefunden am 2016-03-10]
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]

## Beschreibung

Die Erfindung betrifft ein computerimplementiertes Verfahren zur Zugriffskontrolle, einen ID-Token, ein Verfahren zur Freigabe eines Zugriffs auf eine zugriffsbeschränkte Sicherungsanlage, ein Terminal sowie ein Sicherheitssystem.

Sicherungsanlagen, beispielsweise Alarmanlagen oder Verriegelungsanlagen, haben sowohl im privaten als auch im gewerblichen Umfeld eine hohe Verbreitung gefunden. Sicherungsanlagen dienen beispielsweise dazu, ausschließlich einem vordefinierten Personenkreis Zutritt zu einem Gebäude oder einem Gebäudeteil zu ermöglichen. Damit eine bestimmte Person Zutritt zur Sicherungsanlage bekommt, ist eine Authentisierung der Person gegenüber der Sicherungsanlage erforderlich.

Die Authentisierung der Person kann beispielsweise mittels Passworteingabe über ein Terminal oder mittels einer Berechtigungskarte, die mit dem Terminal Daten austauscht, erfolgen. Aus der DE 10 20013 105 727 ist ein Verfahren zum Deaktivieren einer Sicherungsanlage unter Verwendung eines elektronisch auslesbaren Identifikationsdokumentes bekannt. Ferner beschreibt die technische Richtlinie TR-03110 verschiedene Sicherheitsmechanismen für maschinenlesbare Dokumente.

Der Erfindung liegt die Aufgabe zugrunde, ein verbessertes computerimplementiertes Verfahren zur Kontrolle des Zugriffs auf ein in einem ID-Token gespeicherten Attributs, einen verbesserten ID-Token, ein verbessertes Verfahren zur Freigabe eines Zugriffs auf eine zugriffsbeschränkte Sicherungsanlage, ein verbessertes Terminal sowie ein verbessertes Sicherheitssystem zu schaffen.

Die der Erfindung zugrunde liegende Aufgaben werden durch die Merkmale der unabhängigen Patentansprüche gelöst. Bevorzugte Ausführungsformen der Erfindung sind in den abhängigen Patentansprüchen angegeben.

Ausführungsformen der Erfindung betreffen ein computerimplementiertes Verfahren zur Kontrolle des Zugriffs eines Terminals auf ein in einem gespeicherten Attribut, wobei der ID-Token einem Nutzer zugeordnet ist, wobei das Verfahren ein Empfang einer Kennung des Terminals durch den ID-Token und eine Überprüfung durch den ID-Token umfasst, ob zu der Kennung des Terminals gültig zugeordnet eine Sitzungskennung in dem ID-Token gespeichert ist, wobei im Falle dessen zu der Kennung des Terminals gültig zugeordnet die Sitzungskennung in dem ID-Token gespeichert ist der ID-Token die Sitzungskennung an das Terminal übermittelt und eine Freigabe eines Zugriffs des Terminals auf das Attribut erfolgt, wobei eine weitere nachfolgende Kommunikation mit dem Zugriff auf das Attribut verschlüsselt mit einem sitzungsgebundenen Sitzungsschlüssel erfolgt, wobei der sitzungsgebundene Sitzungsschlüssel zu der Sitzungskennung oder der Kennung des Terminals zugeordnet im ID-Token gespeichert ist, wobei im Falle dessen zu der Kennung des Terminals gültig zugeordnet keine Sitzungskennung in dem ID-Token gespeichert ist das Verfahren umfasst:
- Authentisierung des Terminals durch den ID-Token und Authentisierung des ID-Tokens gegenüber dem Terminal, wobei nach erfolgreicher Durchführung der Authentisierungen eine Freigabe des Zugriffs des Terminals auf das Attribut erfolgt,
- Ableiten eines sitzungsgebundenen Sitzungsschlüssels, wobei eine weitere nachfolgende Kommunikation mit dem Zugriff auf das Attribut verschlüsselt mit einem sitzungsgebundenen Sitzungsschlüssel erfolgt,
- Ableiten einer Sitzungskennung,
- Speichern der Kennung des Terminals zugeordnet zu der Sitzungskennung in dem ID-Token,
- Speichern des sitzungsgebundenen Sitzungsschlüssels zugeordnet zu der Kennung des Terminals in dem ID-Token.

Der Sitzungsgebundene Sitzungsschlüssel kann dabei direkt der Kennung des Terminals zugeordnet im ID-Token gespeichert sein, oder er kann indirekt über die Sitzungskennung der Kennung des Terminals zugeordnet im ID-Token gespeichert sein.

Der Begriff "ID-Token" bezeichnet eine Vorrichtung, wie beispielsweise ein tragbares elektronisches Gerät, zum Beispiel einen sogenannten USB-Stick, oder ein Dokument, insbesondere ein Wert- oder Sicherheitsdokument.

Unter einem "Dokument" werden papierbasierte und/oder kunststoffbasierte Dokumente verstanden, wie zum Beispiel Ausweisdokumente, insbesondere Reisepässe, Personalausweise, Visas sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Unter einem "Attribut" wird im Folgenden ein Datenwert, zum Beispiel eine Zahl oder ein Text, verstanden. Bei dem Attribut kann es sich um eine Angabe bezüglich der Identität eines Nutzers handeln, dem der ID-Token zugeordnet ist, insbesondere bezüglich dessen sogenannter digitaler Identität. Beispielsweise können Name, Vorname, Adresse des Nutzers Attribute darstellen. Ein Attribut kann auch Daten beinhalten, die zur Überprüfung der Berechtigung des Nutzers zur Inanspruchnahme eines bestimmten Online-Dienstes dienen, wie zum Beispiel das Alter des Nutzers, wenn dieser einen Onlinedienst in Anspruch nehmen möchte, der einer bestimmten Altersgruppe vorbehalten ist, oder ein anders Attribut, welches die Zugehörigkeit des Nutzers zu einer bestimmten Gruppe dokumentiert, welche zur Nutzung des Onlinedienstes berechtigt ist. Ein "Attribut" kann auch einen Datenwert bezeichnen, welcher eine Zugangsberechtigung zu einer zugriffsbeschränkten Sicherungsanlage umfasst. In diesem Zusammenhang kann das Attribut ebenfalls eine bestimmte Gruppenzugehörigkeit angeben, wobei der Zugriff auf die zugriffsbeschränkte Sicherungsanlage von der besagten Gruppenzugehörigkeit abhängt.

Eine zugriffsbeschränkte Sicherungsanlage wird im Rahmen der vorliegenden Beschreibung als eine Einrichtung verstanden, die den Zugang zu bestimmten räumlichen Bereichen oder auch den Zugriff auf bestimmte Daten kontrolliert. Ein Zugriff ist nur nach Nachweis einer entsprechenden Berechtigung mittels des ID-Tokens möglich.

Ein Authentisierungsserver ist ein Server, welcher die hierzu notwendigen Berechtigungen verwaltet und gegebenenfalls gegenüber einer internen Datenbank abgleicht.

Unter einem "statischen" Schlüssel wird im Folgenden ein kryptografischer Schlüssel bzw. Datenwert verstanden, welcher in einem nichtflüchtigen Speichermedium gespeichert ist und für mehr als nur einer Sitzung Verwendung finden kann. Im Gegensatz dazu werden Sitzungsschlüssel bzw. sitzungsgebundene, temporäre Schlüssel bzw. Datenwerte originär nur für eine Sitzung generiert und nicht permanent gespeichert, sodass sie eigentlich in einer weiteren Sitzung nicht mehr verwendet werden können.

Die Erfindung schlägt nun aber vor, genau diesen sitzungsgebundenen Sitzungsschlüssel mehrmals zu verwenden, also in verschiedenen Sitzungen, sofern die obig beschriebenen Voraussetzungen bezüglich der gültigen Speicherung der zu der Kennung des Terminals zugeordneten Sitzungskennung in dem ID-Token erfüllt sind.

Ausführungsformen der Erfindung könnten den Vorteil haben, dass der Zugriff des Terminals auf das Attribut in besonders sicherer Weise seitens des ID-Tokens kontrolliert werden kann. Die Gefahr eines unberechtigten Zugriffs auf das Attribut wird also minimiert. Trotz der hohen Sicherheit könnte die Geschwindigkeit, mit welcher die Zugriffskontrolle seitens des ID-Tokens erfolgt, hoch sein, da nicht für jeden Zugriffsversuch des Terminals auf das Attribut aufwändige z.B. Signaturüberprüfungen durchgeführt werden müssen. Solange zu der Kennung des Terminals gültig zugeordnet eine Sitzungskennung in dem ID-Token gespeichert ist, werden etwaige Signaturüberprüfungen und zum Beispiel damit verbundene elliptische Kurvenoperationen, welche Zeit und Energie kosten, vermieden. Auch eine Berechung eines neuen sitzungsgebundenen Sitzungsschlüssels entfällt. Stattdessen könnte ein schneller Speicherzugriff auf einen entsprechenden Speicherbereich des IT-Tokens erfolgen, um nach Überprüfung der Gültigkeit der Speicherung der Sitzungskennung zugeordnet zur Kennung des Terminals den Zugriff des Terminals vorzugsweise ohne weitere Sicherheitsüberprüfungen oder Authentisierungen zu ermöglichen.

Ein weiterer Vorteil der Erfindung könnte sein, dass der ID-Token seine Identität anfänglich bei der Kommunikation mit dem Terminal nicht dem Terminal preisgeben muss. Es könnte also vermieden werden, dass beliebige Terminals versuchen, mit dem ID-Token Kontakt aufzunehmen, um so dessen Identität zu erfahren. Letzteres könnte zu einem möglichen "Tracking" des ID-Token führen. Stattdessen schlägt die Erfindung vor, dass im Falle dem ID-Token unbekannter Terminals, wenn also die Kennung des Terminals insbesondere überhaupt nicht im ID-Token gespeichert ist, der ID-Token und das Terminal eine gegenseitige Authentisierungsprozedur durchführen müssen. Das gegenseitige Vertrauen ergibt sich erst dann, wenn diese Authentisierungsprozedur erfolgreich abgeschlossen wurde.

Nach einer Ausführungsform der Erfindung wird im Falle dessen zu der Kennung des Terminals gültig zugeordnet die Sitzungskennung in dem ID-Token gespeichert ist durch den ID-Token ein Salz erzeugt. Ferner wird durch den ID-Token ein Hash-Wert aus der Kennung des Terminals, dem Salz und der Sitzungskennung erzeugt. Die Übermittlung der Sitzungskennung vom ID-Token an das Terminal erfolgt dann in Form einer Übermittlung des Hash-Wertes zusammen mit dem Salz.

Dies könnte den Vorteil haben, dass die Kommunikationssicherheit zwischen ID-Token und Terminal weiter erhöht wird. Selbst ein Man-In-The-Middle Angriff auf die Kommunikation zwischen ID-Token und Terminal würde lediglich einen Hash-Wert liefern, welcher jedoch ohne Kenntnis der Sitzungskennung wertlos ist.

Die Sitzungskennung sollte grundsätzlich ein Geheimnis sein, welches ausschließlich dem ID-Token und dem Terminal bekannt ist. Der Begriff des "Ableitens" der Sitzungskennung soll dabei so verstanden werden, dass im Rahmen des Authentisierungsverfahrens oder im Anschluss daran in der Sitzung des Authentisierungsverfahrens festgelegt wird, was die Sitzungskennung ist. Dies kann das Terminal machen und die Sitzungskennung dann dem ID-Token übermitteln, dies kann der ID-Token machen und die Sitzungskennung dann dem Terminal übermitteln, oder das können ID-Token und Terminal unabhängig voneinander machen. Letzteres erfordert die Sicherstellung, dass ID-Token und Terminal unabhängig voneinander zu dem gleichen Ergebnis, der gleichen Sitzungskennung gelangen. Bezüglich des Ableitens des sitzungsgebundenen Sitzungsschlüssels gilt analog dasselbe.

Nach einer Ausführungsform der Erfindung erfolgt im Falle dessen zu der Kennung des Terminals gültig zugeordnet die Sitzungskennung in dem ID-Token gespeichert ist die Freigabe des Zugriffs des Terminals auf das Attribut für die aktuelle Sitzung zwischen ID-Token und Terminal ohne einen weiteren Authentisierungsvorgang zwischen ID-Token und Terminal.

Nach einer Ausführungsform der Erfindung
- werden im Falle dessen zu der Kennung des Terminals gültig zugeordnet keine Sitzungskennung in dem ID-Token gespeichert ist bei der Authentisierung des Terminals durch den ID-Token Metadaten eines permanenten Zertifikats des Terminals empfangen, wobei die Metadaten eine Zugriffsberechtigung umfassen, wobei nach erfolgreicher Durchführung der Authentisierungen in dem ID-Token zugeordnet zu der Kennung des Terminals zumindest die Zugriffsberechtigung gespeichert wird und die Freigabe des Zugriffs des Terminals auf das Attribut entsprechend der Zugriffsberechtigung erfolgt,
- wird im Falle dessen zu der Kennung des Terminals gültig zugeordnet die Sitzungskennung in dem ID-Token gespeichert ist die der Kennung des Terminal zugeordnete Zugriffsberechtigung durch den ID-Token gelesen, wobei die Freigabe des Zugriffs des Terminals auf das Attribut entsprechend der Zugriffsberechtigung erfolgt.

Dies könnte den Vorteil haben, dass über das Zertifikat des Terminals bereits im Voraus festgelegt werden kann, wie und auf welche Attribute das Terminal Zugriff erhalten soll. Beispielsweise können spezifische Attribute angegeben werden, sodass insgesamt nicht ein Vollzugriff auf sämtliche im ID-Token gespeicherten Attribute erfolgt, sondern nur auf eine beschränkte Auswahl hiervon. Ferner kann die Zugriffsberechtigung eine Angabe dahingehend enthalten sein, ob nur ein Lesezugriff, oder ein Lese- und Schreibzugriff gegeben ist.

In einer konkreten Anwendung könnte es denkbar sein, dass das besagte Terminal in einem Sicherheitssystem zum Einsatz kommt, bei welchem das Terminal mit einer zugriffsbeschränkten Sicherungsanlage gekoppelt ist. Bei erstmaliger Benutzung des ID-Tokens zum Zugang zur Sicherungsanlage könnte das Terminal eine entsprechende Zugangsberechtigung als Attribut in dem ID-Token speichern. Für diesen erstmaligen Speicherzugriff benötigt das Terminal eine entsprechende Zugriffsberechtigung. Ferner ist es denkbar, dass das Terminal in nachfolgenden Kommunikationsvorgängen mit dem ID-Token auch die Berechtigung behalten muss, die Möglichkeit des Zugriffs auf die Sicherungsanlage durch beispielsweise Entzug der Zugangsberechtigung zu unterbinden oder einzuschränken.

Nach einer Ausführungsform der Erfindung
- wird im Falle dessen zu der Kennung des Terminals gültig zugeordnet keine Sitzungskennung in dem ID-Token gespeichert ist nach erfolgreicher Durchführung der Authentisierungen in dem ID-Token zugeordnet zu der Kennung des Terminals ein erster Zeitstempel gespeichert, wobei der erste Zeitstempel eine maximale Gültigkeitsdauer des sitzungsgebundenen Sitzungsschlüssels angibt,
- wird im Falle dessen zu der Kennung des Terminals gültig zugeordnet die Sitzungskennung in dem ID-Token gespeichert ist der der Kennung des Terminal zugeordnete Zeitstempel gelesen, wobei eine gültige Speicherung des sitzungsgebundenen Sitzungsschlüssels nur dann gegeben ist, wenn der erste Zeitstempel noch gültig ist.

Zum Beispiel weisen die Metadaten nach einer Ausführungsform der Erfindung den ersten Zeitstempel auf.

Nach einer weiteren Ausführungsform der Erfindung ist es möglich, dass der erste Zeitstempel für das Speichern des sitzungsgebundenen Sitzungsschlüssels in dem ID-Token erzeugt wird, wobei der erste Zeitstempel auf Basis einer vordefinierten relativen Gültigkeitsdauer erzeugt wird. Die besagte relative Gültigkeitsdauer, welche vordefiniert ist, könnte beispielsweise eine Zeitdauer wie ein Jahr, sechs Monate, 24 Stunden umfassen, wobei zum Beispiel mit dem Speichern des sitzungsgebundenen Sitzungsschlüssels eine Systemzeit des Terminals oder des ID-Tokens herangezogen wird, und die relative Gültigkeitsdauer der Systemzeit hinzuaddiert wird. Hieraus ergibt sich die maximale Gültigkeitsdauer in Form eines absoluten Zeitwertes, z.B. eines Ablaufdatums. Im Falle dessen es sich bei dem Metadaten um einen Zeitstempel handelt, kann damit die Gültigkeitsdauer des Zugriffs des Terminals auf das Attribut ausgehend von einem initialen Zeitpunkt für eine bestimmte erste Zeitdauer ohne weitere Authentisierung durchgeführt werden. Die Authentisierung erfolgt also in diesem Fall nicht ständig, sondern nur zu vordefinierten Zeitpunkten.

Der erste Zeitstempel könnte auch angeben, wie oft die Sitzungskennung für unterschiedliche Sitzungen in einem vordefinierten Zeitraum verwendet werden darf, bevor eine neue Sitzungskennung Verwendung finden muss, also die Authentisierungen teilweise oder vollständig neu durchgeführt werden müssen. So kann z.B. definiert werden, dass innerhalb eines Monats die Sitzungskennung nur in 5 verschiedenen Sitzungen Verwendung finden darf. Nach der 5. Sitzung ist die Sitzungskennung ungültig. Ebenso kann definiert werden, dass bezüglich eines beliebig langen Zeitraums die Sitzungskennung nur in 5 verschiedenen Sitzungen Verwendung finden darf. Nach der 5. Sitzung ist also auch hier die Sitzungskennung ungültig.

Ein konkretes Anwendungsbeispiel könnte das obig beschriebene Sicherheitssystem darstellen, bei welchem ein Authentisierungsserver die finale Überprüfung des Attributs und die Freigabe eines Zugriffs auf die Sicherungsanlage durchführt. Das Terminal arbeitet hier also lediglich als Schnittstelle zwischen ID-Token und Authentisierungsserver und sorgt dafür, dass der ID-Token sicher sein kann, dass er mit einer vertrauenswürdigen Instanz (Terminal) kommuniziert. Sobald der Authentisierungsserver erstmalig die Freigabe des Zugriffs auf die Sicherungsanlage erteilt hat, könnte über das Terminal ein entsprechendes Attribut im ID-Token gespeichert werden, welches für einen bestimmten ersten Zeitraum den weiteren Zugriff auf die Sicherungsanlage ohne weitergehende und zusätzliche aufwendige Authentisierung ermöglicht.

Grundsätzlich ist es auch möglich, dass die Metadaten wie obig beschrieben den ersten Zeitstempel aufweisen, wobei in diesem Fall das Terminal selbst festlegt, in welchen zeitlichen Abständen eine Authentisierung des Terminals durch den ID-Token zu erfolgen hat.

Nach einer Ausführungsform der Erfindung umfasst die Authentisierung durch den ID-Token den Empfang eines permanenten Zertifikats des Terminals, das Ableiten eines Terminal Hash-Wertes aus dem Zertifikat und ein Überprüfen, ob der Terminal Hash-Wert in dem ID-Token gültig gespeichert ist, wobei im Falle dessen der Terminal Hash-Wert in dem ID-Token gültig gespeichert ist eine Freigabe des Zugriffs des Terminals auf das Attribut ohne eine weitere Überprüfung des permanenten Zertifikats des Terminals erfolgt, wobei die Authentisierung durch den ID-Token umfasst:
- Ableiten einer ersten Signatur aus dem permanenten Zertifikat des Terminals und Verifizierung der ersten Signatur mit dem Terminal Hash-Wert und einem dem permanenten Zertifikat zugehörigen öffentlichen Schlüssel des Terminals , wobei der Terminal-Hash Wert einen Hash der Metadaten des Zertifikats umfasst,
- Empfang eines sitzungsgebundenen öffentlichen Schlüssels des Terminals ,
- Erzeugung und Senden eines zufälligen ersten Geheimnisses an das Terminal,
- Empfang einer zweiten Signatur von dem Terminal und Verifizierung der zweiten Signatur unter Verwendung des sitzungsgebundenen öffentlichen Schlüssels des Terminals , des zufälligen ersten Geheimnisses und dem dem permanenten Zertifikat zugehörigen öffentlichen Schlüssel des Terminals,
- Nach erfolgreicher Verifizierung der ersten und zweiten Signatur, Speichern des Terminal Hash-Wertes in dem ID-Token.

Dies könnte den Vorteil haben, dass der Zugriff des Terminals auf das Attribut auf mehrstufige Art und Weise seitens des ID-Tokens kontrolliert werden kann. Die Gefahr eines unberechtigten Zugriffs auf das Attribut wird also minimiert und dennoch könnte die Geschwindigkeit, mit welcher die Zugriffskontrolle seitens des ID-Tokens erfolgt, hoch sein, da nicht für jeden Zugriffsversuch des Terminals auf das Attribut die obig beschriebenen Signaturüberprüfungen vollständig durchgeführt werden müssen. Solange der Terminal-Hash-Wert in dem ID-Token gültig gespeichert ist, werden die besagten Signaturüberprüfungen und zum Beispiel damit verbundene elliptische Kurvenoperationen, welche Zeit und Energie kosten, vermieden. Stattdessen erfolgt ein schneller Speicherzugriff auf einen entsprechenden Speicherbereich des IT-Tokens, um nach Überprüfung der Gültigkeit des Hash-Werts in dem ID-Token den Zugriff des Terminals auf das Attribut ohne weitere Überprüfung des permanenten Zertifikats des Terminals zu ermöglichen.

Die Mehrstufigkeit der Zugriffskontrolle ist also wie folgt gegeben: In einer ersten Stufe erfolgt eine Überprüfung durch den ID-Token, ob zu der Kennung des Terminals gültig zugeordnet eine Sitzungskennung in dem ID-Token gespeichert ist. Terminal- und ID-Token Authentisierung könnten vollständig entfallen. Ist die Überprüfung auf der ersten Stufe nicht erfolgreich, erfolgt in einer zweiten Stufe die Überprüfung, ob nicht wenigstens der Terminal Hash-Wert in dem ID-Token gültig gespeichert ist. Hier könnte die ID-Token Authentisierung entfallen. Erst wenn auch die zweite Stufe der Überprüfung nicht erfolgreich ist, müsste in einer dritten Stufe eine vollständige Terminal- und ID-Token Authentisierung durchgeführt werden.

Nach einer Ausführungsform ist dem permanenten Zertifikat ein permanenter öffentlicher Schlüssel des Terminals zugeordnet, wobei durch den ID-Token im Falle dessen der Terminal-Hash-Wert in dem ID-Token nicht gültig gespeichert ist, nach der erfolgreichen Verifizierung der ersten und zweiten Signatur der permanente öffentliche Schlüssel verknüpft mit dem Terminal-Hash-Wert in dem ID-Token gespeichert wird und eine weitere Kommunikation mit dem Terminal im Rahmen der Authentisierung verschlüsselt unter Verwendung des permanenten öffentlichen Schlüssels des Terminals erfolgt. Im Falle dessen hingegen der Terminal-Hash-Wert in dem ID-Token gültig gespeichert ist, wird der mit dem Terminal-Hash-Wert verknüpfte gespeicherte permanente öffentliche Schlüssel des Terminals gelesen und eine weitere Kommunikation mit dem Terminal erfolgt im Rahmen der Authentisierung verschlüsselt unter Verwendung des permanenten öffentlichen Schlüssels des Terminals. Zum Beispiel ist der permanente öffentliche Schlüssel in dem permanenten Zertifikat enthalten, wobei der Terminal-Hash-Wert einen Hash des permanenten öffentlichen Schlüssels umfasst.

Dies könnte den Vorteil haben, dass die Geschwindigkeit der Authentisierung des Terminals durch den ID-Token weiter erhöht wird, da im Falle dessen der Terminal-Hash-Wert in dem ID-Token gültig gespeichert ist, ein erneuter Austausch in Form einer Datenübertragung des permanenten öffentlichen Schlüssels des Terminals entfällt. Der permanente öffentliche Schlüssel des Terminals kann direkt aus dem Speicher des ID-Tokens gelesen werden und für die weitere Kommunikation mit dem Terminal Verwendung finden. Dadurch, dass der permanente öffentliche Schlüssel des Terminals in dem permanenten Zertifikat enthalten ist, wird dieser im Rahmen der Authentisierung automatisch empfangen und kann in Verbindung mit dem Terminal-Hash-Wert weitere Verwendung finden, ohne dass hierzu ein separater Datenaustauschschritt bezüglich des permanenten öffentlichen Schlüssels notwendig wäre. Da der Terminal-Hash-Wert den Hash des permanenten öffentlichen Schlüssels umfasst, ist außerdem sichergestellt, dass der Terminal-Hash-Wert in eindeutiger Weise dem besagten Terminal zugeordnet werden kann. Da davon auszugehen ist, dass der öffentliche Schlüssel einzigartig ist, ist sichergestellt, dass aufgrund des Eingehens des permanenten öffentlichen Schlüssels in den Terminal-Hash-Wert auch der Terminal-Hash-Wert selbst eine Einzigartigkeit besitzt und damit eine eindeutige Identifikation des Terminals und damit eine eindeutige Authentisierung des Terminals gewährleistet werden kann.

Nach einer Ausführungsform der Erfindung wird durch den ID-Token im Falle dessen der Terminal-Hash-Wert in dem ID-Token nicht gültig gespeichert ist, nach der erfolgreichen Verifizierung der ersten und zweiten Signatur der permanente öffentliche Schlüssel verknüpft mit einem zweiten Zeitstempel in dem ID-Token gespeichert, wobei der zweite Zeitstempel eine maximale Gültigkeitsdauer des Terminal-Hash-Werts angibt. Im Falle dessen der Terminal-Hash-Wert in dem ID-Token gespeichert ist, wird hingegen der mit dem Terminal-Hash-Wert verknüpfte gespeicherte zweite Zeitstempel gelesen und eine gültige Speicherung des Terminal-Hash-Wert ist nur dann gegeben, wenn der zweite Zeitstempel noch gültig ist. Zum Beispiel weisen die Metadaten nach einer Ausführungsform der Erfindung den zweiten Zeitstempel auf.

Nach einer weiteren Ausführungsform der Erfindung ist es möglich, dass der zweite Zeitstempel für das Speichern des Terminal-Hash-Werts in dem ID-Token erzeugt wird, wobei der Zeitstempel auf Basis einer vordefinierten relativen Gültigkeitsdauer erzeugt wird. Im Falle dessen die Metadaten den zweiten Zeitstempel aufweisen, kann damit die Gültigkeitsdauer des Zugriffs des Terminals auf das Attribut ausgehend von einem initialen Zeitpunkt für eine bestimmte Zeitdauer ohne weitere Authentisierung und in Verwendung der ersten Signatur, des sitzungsgebundenen öffentlichen Schlüssels, des Geheimnisses usw. durchgeführt werden. Die vollständige Authentisierung erfolgt also in diesem Fall nicht ständig, sondern nur zu vordefinierten Zeitpunkten.

Außerdem gilt bezüglich des zweiten Zeitstempels das bezüglich des ersten Zeitstempels gesagte analog.

Grundsätzlich ist es alsoh möglich, dass die Metadaten wie obig beschrieben den zweiten Zeitstempel aufweisen, wobei in diesem Fall das Terminal selbst festlegt, in welchen zeitlichen Abständen eine vollständige Authentisierung des Terminals durch den ID-Token zu erfolgen hat.

Nach einer Ausführungsform wird das permanente Zertifikat des Terminals in einer ersten Nachricht durch den ID-Token von dem Terminal empfangen, wobei die erste Nachricht ein Wurzelzertifikat umfasst, wobei im Falle dessen der Terminal-Hash-Wert in dem ID-Token nicht gültig gespeichert ist, die Authentisierung durch den ID-Token ferner eine Verifizierung des permanenten Zertifikats des Terminals über das Wurzelzertifikat mittels eines auf dem ID-Token gespeicherten öffentlichen Schlüssels einer Wurzelzertifizierungsstelle umfasst, wobei erst nach erfolgreicher Verifizierung des permanenten Zertifikats des Terminals über das Wurzelzertifikat das Speichern des Terminal-Hash-Wertes in dem ID-Token und Freigabe des Zugriffs des Terminals auf das Attribut erfolgt.

Dies könnte den Vorteil haben, dass durch eine zentrale vertrauenswürdige Instanz (Wurzelzertifizierungsstelle) festgelegt werden kann, in welcher Weise der Zugriff auf das Attribut erfolgen kann. Da üblicherweise der Wurzelzertifizierungsstelle von sowohl dem ID-Token als auch dem Terminal vertraut wird, kann der ID-Token davon ausgehen, dass sämtliche in den Metadaten enthaltenen Informationen insbesondere aus datenschutzrechtlichen Gründen als akzeptabel anzusehen sind. Befinden sich auf dem ID-Token beispielsweise auch sensitive persönliche Informationen wie ein Geburtsdatum, biometrische Informationen, eine Wohnadresse und vieles mehr, muss ein Benutzer des ID-Tokens kein Sorge haben, dass das Terminal unbefugt in Besitz von entsprechenden Attributen gelangt, welche der Nutzer des ID-Tokens dem Terminal überhaupt nicht zur Verfügung gestellt hätte. Durch die Absicherung des Vertrauens einer zentralen Wurzelzertifizierungsstelle ist insofern sichergestellt, dass ein Missbrauch des ID-Tokens durch das Terminal unterbunden bleibt.

Nach einer Ausführungsform wird die erste Nachricht ohne eine vorherige von dem Terminal empfangene Ankündigung oder Referenz der Zertifizierungsstelle des permanenten Zertifikats empfangen. Die Verwendung von MSE:Set DST zur Auswahl der Wurzelzertifizierungsstelle des Terminals entfällt also und stattdessen arbeitet der ID-Token grundsätzlich mit einer einzigen Wurzelzertifizierungsstelle. Dem Terminal ist das bekannt, sodass die Auswahl eines für eine spezifische Zertifizierungsstelle zugeschnittenen Zertifikats des Terminals auf Seiten des ID-Tokens entfällt und damit ein zusätzlicher Datenübertragungsschritt vom ID-Token zum Terminal zur Anforderung der zugehörigen Referenz der Zertifizierungsstelle des permanenten Zertifikats entfällt. Auch dies könnte den Prozess der Authentisierung weiter beschleunigen.

Nach einer weiteren Ausführungsform der Erfindung wird das erste Geheimnis ohne eine explizite Anforderung des Terminals abwartend, automatisch nach Empfang des sitzungsgebundenen öffentlichen Schlüssels des Terminals erzeugt und an das Terminal gesendet. Anstatt also explizit nach einem MSE:Set AT seitens des Terminals mit einem zusätzlichen Kommando "Get Challenge" das erste Geheimnis anzufordern, wird seitens des ID-Tokens das erste Geheimnis ohne die besagte explizite Anforderung "Get Challenge" automatisch nach Empfang des sitzungsgebundenen öffentlichen Schlüssels oder nach Empfang des MSE:Set AT an das Terminal gesendet. Auch dies spart wiederum einen weiteren Kommunikationsschritt zwischen ID-Token und Terminal, sodass die Authentisierung auch in diesem Punkt beschleunigt werden könnte.

Nach einer weiteren Ausführungsform der Erfindung umfasst das Verfahren ferner eine Authentisierung des ID-Tokens gegenüber dem Terminal, wobei die Authentisierung des IT-Tokens umfasst:
- Senden des öffentlichen Schlüssels des IT-Tokens und einen zu dem öffentlichen Schlüssel zugehörigen Domainparameter an das Terminal, wobei entweder der öffentliche Schlüssel des IT-Tokens automatisch und ohne eine vorherige explizite Anforderung seitens des Terminals gesendet wird oder der ID-Token über mehrere der verschiedenen öffentlichen Schlüssel verfügt, einer dieser verschiedenen öffentlichen Schlüssel als Standardschlüssel definiert ist und bei Empfang einer allgemeiner Anforderung eines öffentlichen Schlüssels seitens des Terminals der Standardschlüssel als der öffentliche Schlüssel des IT-Tokens an das Terminal gesendet wird,
- Berechnen eines mit dem Terminal gemeinsamen zweiten Geheimnisses aus dem privaten Schlüssel des IT-Tokens, dem sitzungsgebundenen öffentlichen Schlüssels des Terminals und den Domainparameter,
- Erzeugen eines zufälligen dritten Geheimnisses, Senden des zufälligen dritten Geheimnisses an das Terminal und Berechnen eines symmetrischen Sitzungsschlüssels aus dem dritten Geheimnis und dem mit dem Terminal gemeinsamen zweiten Geheimnis,
wobei die weitere nachfolgende Kommunikation mit dem Zugriff auf das Attribut verschlüsselt mit dem symmetrischen Sitzungsschlüssel erfolgt.

Nach dem obig beschrieben "Terminal Authentication" erfolgt also der Prozess der "Chip Authentication", wobei jedoch auch hier zur Einsparung von Kommunikationsschritten der öffentliche Schlüssel des IT-Tokens automatisch und ohne eine vorherige explizite Anforderung seitens des Terminals gesendet wird. So muss beispielsweise in einem MSE:Set AT des Terminals keine explizite Referenz des Schlüssels enthalten sein, dessen Besitz bewiesen werden soll. Es genügt ein MSE:Set AT und der ID-Token wird automatisch seinen einzelnen öffentlichen Schlüssel an das Terminal senden oder im Falle des Verfügens über mehrere verschiedene öffentliche Schlüssel einen seitens des ID-Tokens als "Standard" definierten öffentlichen Schlüssel an das Terminal senden. Das Terminal übermittelt also nicht mehr explizit die Referenz des Schlüssels, für den der ID-Token die Kenntnis seines privaten Schlüssels beweisen soll.

Es sei angemerkt, dass zur Umsetzung dieser Ausführungsform entweder auf die Angabe der Referenz des Schlüssels, dessen Besitz bewiesen werden soll, im MSE:Set AT-Kommando verzichtet werden kann, oder es kann sogar gänzlich auf das Übermitteln des MSE:Set AT-Kommandos seitens des Terminals verzichtet werden.

Der eigentliche Beweis des Besitzes des zum öffentlichen Schlüssel des IT-Tokens zugehörigen privaten Schlüssels erfolgt durch die besagten Schritte des Berechnens des gemeinsamen zweiten Geheimnisses, des zufälligen dritten Geheimnisses und des symmetrischen Sitzungsschlüssels. Nur wenn der ID-Token in der Lage ist, einen symmetrischen Sitzungsschlüssel zu berechnen, welcher mit einem in entsprechender Weise auf seitens des Terminals berechneten symmetrischen Sitzungsschlüssel identisch ist, kann die nachfolgende Kommunikation zwischen Terminal und ID-Token überhaupt mit dem Zugriff auf das Attribut verschlüsselt mit dem symmetrischen Sitzungsschlüssel erfolgen.

In einem weiteren Aspekt betrifft die Erfindung einen ID-Token mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens wie obig beschrieben bewirken.

In einem weiteren Aspekt betrifft die Erfindung ein Verfahren zur Freigabe eines Zugriffs auf eine zugriffsbeschränkte Sicherungsanlage mittels eines ID-Tokens, wobei das Verfahren umfasst:
- Durchführung des Verfahrens, wie obig beschrieben durch den ID-Token,
- nach Freigabe des Zugriffs des Terminals auf das Attribut, Lesen des Attributs durch das Terminal und Versenden einer Zugriffsanfrage an einen Authentisierungsserver, wobei die Zugriffsanfrage das Attribut verschlüsselt umfasst,
- Entschlüsselung und Überprüfung des Attributs durch den Authentisierungsserver, wobei der Authentisierungsserver im Fall einer erfolgreichen Überprüfung den Zugriff auf die Sicherungsanlage freigibt. Anhand des Attributs ist zum Beispiel der Authentisierungsserver in der Lage, über eine Freigabe oder Nichtfreigabe des Zugriffs auf die Sicherungsanlage zu entscheiden.

In einem weiteren Aspekt betrifft die Erfindung ein Sicherheitssystem, umfassend einen obig beschriebenen ID-Token sowie eine zugriffsbeschränkte Sicherungsanlage, einen Terminal und einen Authentisierungsserver,
- wobei das Terminal dazu ausgebildet, nach Freigabe des Zugriffs des Terminals auf das Attribut das Attribut zu lesen und eine Zugriffsanfrage an den Authentisierungsserver zu versenden, wobei die Zugriffsanfrage das Attribut verschlüsselt umfasst,
- wobei der Authentisierungsserver dazu ausgebildet ist, eine Entschlüsselung und Überprüfung des Attributs durchzuführen und im Fall einer erfolgreichen Überprüfung den Zugriff auf die Sicherungsanlage freizugeben.

In einem weiteren Aspekt betrifft die Erfindung ein Computerimplementiertes Verfahren zur Kontrolle des Zugriffs eines Terminals auf ein in einem ID-Token gespeicherten Attribut, wobei der ID-Token einem Nutzer zugeordnet ist, wobei das Verfahren das Senden einer Kennung des Terminals durch das Terminal an den ID-Token umfasst, wobei im Falle dessen der ID-Token auf das Senden mit der Übermittlung einer Sitzungskennung an das Terminal antwortet das Terminal überprüft, ob in dem Terminal zu der Sitzungskennung ein sitzungsgebundener Sitzungsschlüssel gültig zugeordnet gespeichert ist, wobei im Falle dessen zu der Sitzungskennung der sitzungsgebundene Sitzungsschlüssel gültig zugeordnet gespeichert ist ein Zugriff des Terminals auf das Attribut erfolgt, wobei der Zugriff mittels einer Kommunikation des Terminals mit dem ID-Token verschlüsselt mit dem sitzungsgebundenen Sitzungsschlüssel erfolgt, wobei im Falle dessen zu der Sitzungskennung kein sitzungsgebundener Sitzungsschlüssel gültig zugeordnet ist das Verfahren umfasst:
- Authentisierung des Terminals gegenüber dem ID-Token und Authentisierung des ID-Tokens durch das Terminal,
- nach erfolgreicher Durchführung der Authentisierungen Ableiten eines sitzungsgebundenen Sitzungsschlüssels, wobei eine weitere nachfolgende Kommunikation mit dem Zugriff auf das Attribut verschlüsselt mit einem sitzungsgebundenen Sitzungsschlüssel erfolgt,
- Ableiten einer Sitzungskennung,
- Speichern des sitzungsgebundenen Sitzungsschlüssels zugeordnet zu der Sitzungskennung in dem Terminal.

Nach einer Ausführungsform der Erfindung wird die Sitzungskennung in Form eines Hash-Wertes zusammen mit einem Salz durch das Terminal von dem ID-Token empfangen, wobei das Terminal
- für alle im Terminal gespeicherten Sitzungskennungen jeweils mit dem Salz und der Kennung des Terminals einen temporären Hash-Wert erzeugt,
- die temporären Hash-Werte mit dem empfangenen Hash-Wert vergleicht und im Fall einer Übereinstimmung einer der Hash-Werte die diesem Hash-Wert zugehörige Sitzungskennung als jene Sitzungskennung verwendet, für welche die Überprüfung stattfindet, ob ein sitzungsgebundener Sitzungsschlüssel gültig zugeordnet gespeichert ist.

In einem weiteren Aspekt betrifft die Erfindung ein Terminal mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung des obig beschriebenen Verfahrens bewirken.

Im Weiteren werden Ausführungsformen der Erfindung mit Bezugnahme auf die Zeichnungen näher erläutert. Es zeigen:
- Figur 1: ein Blockdiagramm eines Sicherheitssystems,
- Figur 2: ein Flussdiagramm eines Verfahrens zur Kontrolle des Zugriffs eines Terminals auf ein in einem ID-Token gespeicherten Attribut,
- Figur 3: ein Flussdiagramm eines Verfahrens zur Freigabe des Zugriffs auf eine zugriffsbeschränkte Sicherungsanlage mittels eines ID-Tokens.
- Figur 4: ein Flussdiagramm eines Verfahrens zur Kontrolle des Zugriffs eines Terminals auf ein in einem ID-Token gespeicherten Attribut.

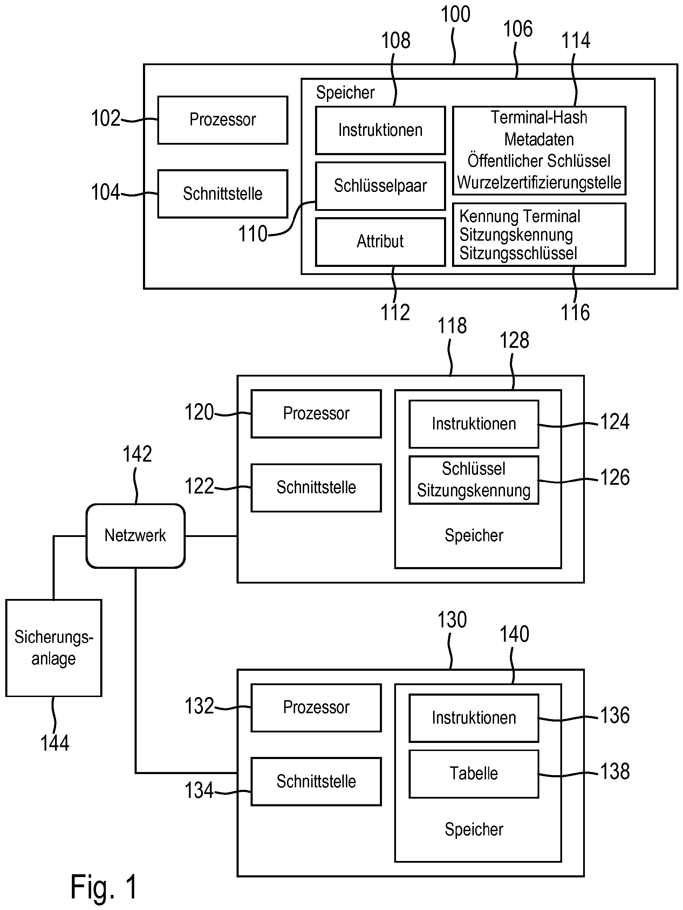

Die Figur 1 zeigt ein Blockdiagramm eines Sicherheitssystems umfassend einen ID-Token 100, ein Terminal 118, einen Authentisierungsserver 130 sowie eine Sicherungsanlage 144. Der ID-Token kann mit dem Terminal 118 über eine kontaktbehaftete oder eine drahtlose Schnittstelle 104 auf Seiten des IT-Tokens 100 und einer Schnittstelle 122 seitens des Terminals 118 kommunizieren. Bei der Kommunikationsart kann es sich insbesondere um eine Nahfeldkommunikation, beispielsweise mittels RFID, Bluetooth oder WLAN handeln.

Die Schnittstelle 122 des Terminals 118, die Schnittstelle 134 des Authentisierungsservers 130 und eine nicht weiter gezeigte Schnittstelle der Sicherungsanlage 144 können über ein Netzwerk 142 zur Kommunikation von Daten untereinander verwendet werden. Bei dem Netzwerk 142 kann es sich beispielsweise um das Internet handeln.

Die Sicherungsanlage 144 dient zur Sicherung des Zugriffs auf oder Zutritts in einen sensitiven Bereich. Beispielsweise könnte es sich bei diesem Bereich um einen räumlichen Bereich handeln und bei der Sicherungsanlage 144 könnte es sich um ein Schließsystem für z.B. eine Türe handeln. So könnte beispielsweise eine Freigabe eines Öffnens der Türe zu dem räumlichen Bereich durch die Sicherungsanlage 144 gesteuert werden. In einem anderen Beispiel dient die Sicherungsanlage 144 zum Schutz von Daten, welche in einer Datenbank gespeichert sind. In diesem Fall kontrolliert die Sicherungsanlage 144 den Zugriff auf die in der Datenbank gespeicherten Daten.

Der ID-Token 100 dient als "Schlüssel", um den Zutritt zu der Sicherungsanlage 144 zu erlangen. Hierzu verfügt ein Speicher 106 des IT-Tokens 100 über ein Attribut 112, welches, wie nachfolgend erläutert wird, an den Authentisierungsserver 130 übertragen wird. Das Attribut 112 wird vom Authentisierungsserver 130 dazu verwendet, über die Freigabe des Zugriffs auf Sicherungsanlage 144 für den Nutzer des ID-Tokens 100 zu entscheiden. Das nachfolgend beschriebene Verfahren sichert dabei, dass sich sowohl der ID-Token 100 als auch das Terminal 118 gegenseitig vertrauen und damit überhaupt einen gegenseitigen Datenaustausch miteinander zur Kommunikation des Attributs 112 ermöglichen.

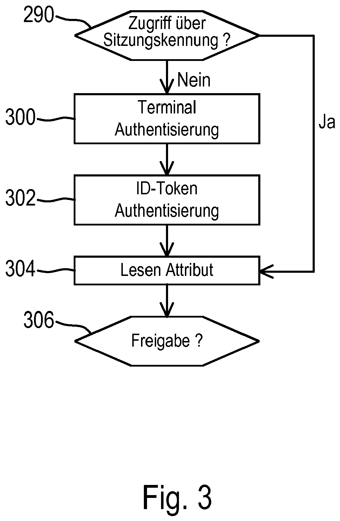

Wie im Flussdiagramm der Figur 3 ersichtlich ist, ist das Verfahren, welches zum Einsatz kommt, mehrstufig. Die Mehrstufigkeit des Verfahrens ist dabei teilweise aus der technischen Richtlinie TR-03110 des Bundesamts für Sicherheit in der Informationstechnik (BSI) bekannt.

Zunächst erfolgt in Schritt 300 eine sogenannte Terminal-Authentisierung, bei welcher das Terminal ein Zertifikat an den ID-Token, beispielsweise eine Chipkarte, übertragen muss. Damit die Karte dieses übertragene Zertifikats validieren kann, muss das Terminal das oder die Zertifikate übertragen, welche dem ID-Token eine Verifizierung mittels des im ID-Token installierten Wurzelzertifikats ermögliche. Eine erfolgreiche Validierung des Zertifikats bedeutet für den ID-Token, dass das Terminal für einen weiteren Datenaustausch vertrauenswürdig ist. Dies ist daher die Grundvoraussetzung für die Durchführung der weiteren Schritte 302 bis 306.

Die ID-Token-Authentisierung in Schritt 302 (auch Chip-Authentisierung genannt) dient dem Nachweis, dass der ID-Token den privaten Schlüssel zu seinem dem Terminal zur Verfügung gestellten öffentlichen Schlüssel kennt. Falls dieser öffentliche Schlüssel auf dem ID-Token durch den Ausweissteller signiert vorliegt, bedeutet der erfolgreiche Abschluss des Protokolls zwischen Terminal und ID-Token, dass der Chip echt und nicht gefälscht ist.

Erst wenn die Schritte 300 und 302 erfolgreich abgeschlossen sind, kann das Terminal in Schritt 304 das Attribut 112 aus dem Speicher 106 des IT-Tokens 100 auslesen und mittels einer verschlüsselten Kommunikation dem Authentisierungsserver 130 zur Verfügung stellen. Der Authentisierungsserver 130 verfügt über einen Prozessor 132 und einen Speicher 140, wobei der Speicher 140 Programminstruktionen 136 aufweist. Die Programminstruktionen 136 dienen zum einen der verschlüsselten Kommunikation mit dem Terminal 118 über die Schnittstelle 134 und sie dienen zum anderen dazu, das Attribut 112 nach Empfang mit in einer Tabelle 138 gespeicherten Attributen abzugleichen. Beispielsweise könnte die Tabelle 138 eine Vielzahl von Attributen enthalten, welche zugehörige ID-Token in eindeutiger Weise identifizieren. Das Vorhandensein der Attribute in der Tabelle 138 steht dabei stellvertretend für eine Vertrauenswürdigkeit der zu diesen Attributen zugehörigen ID-Token 100, wobei den Nutzern dieser ID-Token 100 der Zugang zur Sicherungsanlage 144 gewährt wird.

Nachdem also im Schritt 304 nach der Terminal-Authentisierung und der ID-Token-Authentisierung das Attribut 112 gelesen wurde, findet in Schritt 306 mittels der Programminstruktionen 136 seitens des Authentisierungsservers 130 eine Überprüfung statt, ob eine Freigabe des Zugriffs auf die Sicherungsanlage 144 erteilt werden darf oder nicht. Findet sich im vorliegenden Beispiel das Attribut 112 in der Tabelle 138, wird die Freigabe erteilt. Daraufhin wird beispielsweise ein Öffnungssignal im Falle einer Tür an die Sicherungsanlage 144 über das Netzwerk 142 gesendet. Im Fall des Zugriffs auf Daten wird ein entsprechendes Signal für die Freigabe eines Datenzugriffs an die Sicherungsanlage 144 übermittelt und die Sicherungsanlage erteilt daraufhin die Freigabe eines Zugriffs auf z.B. sensitive Bereiche einer Datenbank.

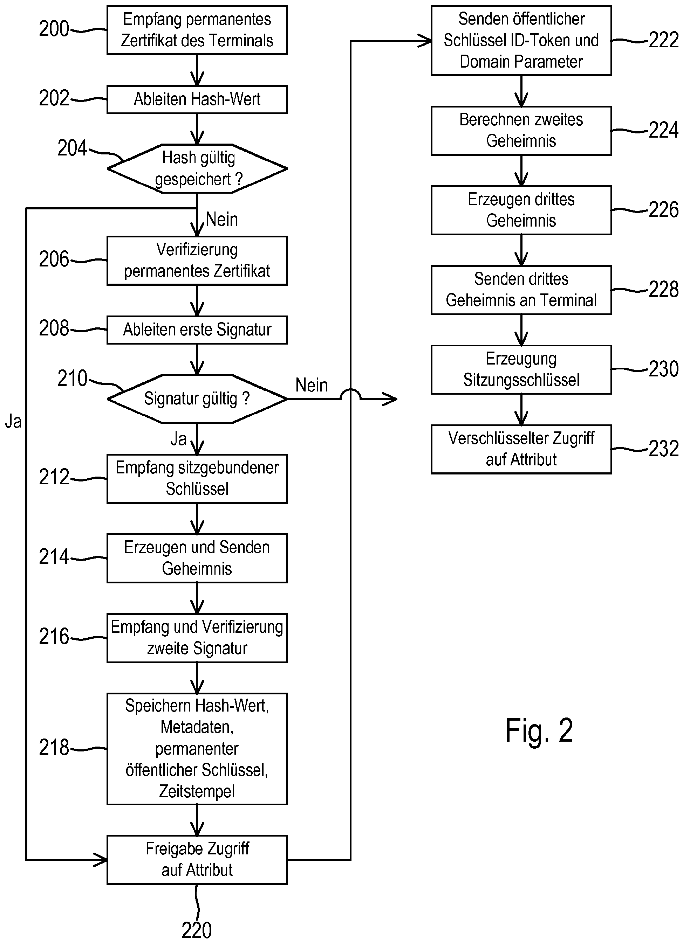

Bezug nehmend auf das Flussdiagramm, welches in Figur 2 gezeigt ist, sei im Folgenden beispielhaft erläutert, wie die obig beschriebene Terminal-Authentisierung und ID-Token-Authentisierung ablaufen können. Zunächst empfängt in Schritt 200 der ID-Token 100 über seine Schnittstelle 104 ein permanentes Zertifikat des Terminals. Aus dem permanenten Zertifikat kann daraufhin ein Hash-Wert in Schritt 202 abgeleitet werden. Das permanente Zertifikat umfasst beispielsweise den besagten Hash-Wert sowie eine Signatur, welche aus diesem Hash-Wert und einem privaten Signaturschlüssel sowie optionalen Metadaten gebildet wurde. Z.B. gilt, dass mittels eines dem permanenten Zertifikat zugehörigen öffentlichen Schlüssels daraufhin eine Authentisierung des Terminals 118 möglich ist.

Im Folgenden sei davon ausgegangen, dass der in Schritt 202 durch den ID-Token 100 abgeleitete Hash-Wert bisher noch nicht in einem Speicher 106 als Terminal-Hash-Wert (Speicherbereich 114) zusammen mit den zugehörigen Metadaten gespeichert ist. Diese Überprüfung erfolgt beispielsweise mittels eines Prozessors 102 des ID-Tokens 100, wobei in dem Speicher 106 weitere Programminstruktionen 108 enthalten sind, mittels welcher sämtliche bezüglich des ID-Tokens beschriebenen Schritte durchgeführt werden können.

Nachdem also angenommenermaßen in Schritt 204 festgestellt wurde, dass der Terminal-Hash-Wert (Speicherbereich 114) in dem ID-Token nicht gespeichert ist, erfolgt in den nachfolgenden Schritten eine vollständige Authentisierung des Terminals durch den ID-Token. So erfolgt in Schritt 206 eine Verifizierung des permanenten Zertifikats, indem eine erste Signatur aus dem permanenten Zertifikat des Terminals, welches in Schritt 200 empfangen wurde, abgeleitet wurde, und eine Verifizierung dieser ersten Signatur mit dem Terminal-Hash-Wert und einem dem permanenten Zertifikat zugehörigen öffentlichen Schlüssels des Terminals erfolgt. Der zugehörige permanente öffentliche Schlüssel des Terminals kann ebenfalls zusammen mit dem Zertifikat oder in dem Zertifikat des Terminals in Schritt 200 empfangen werden. Das Ableiten der ersten Signatur und die Verifizierung der ersten Signatur sind in den Schritten 208 und 210 beschrieben.

Optional ist es möglich, dass das permanente Zertifikat in Schritt 200 in einer ersten Nachricht vom Terminal empfangen wird, wobei diese besagte erste Nachricht ferner ein Wurzelzertifikat umfasst. Das permanente Zertifikat des Terminals kann dann zusätzlich nach Schritt 204 über das Wurzelzertifikat mittels eines auf dem ID-Token im Speicher 106 gespeicherten öffentlichen Schlüssels in einer Wurzelzertifizierungsstelle (Speicherbereich 114) verifiziert werden. Damit wird sichergestellt, dass der permanente öffentliche Schlüssel des Terminals vertrauenswürdig ist.

Sofern im Schritt 210 festgestellt wird, dass die erste Signatur gültig ist und außerdem optional auch das permanente Zertifikat des Terminals gültig ist, wird das Verfahren fortgesetzt. Ansonsten kommt es nach Schritt 210 zu einem in Figur 2 nicht näher gezeigten Abbruch des Authentisierungsverfahrens und die Authentisierung ist fehlgeschlagen.

Wird das Verfahren fortgesetzt, so wird in Schritt 212 ein sogenannter sitzungsgebundener öffentlicher Schlüssel des Terminals 118 empfangen. Der sitzungsgebundene öffentliche Schlüssel des Terminals ist dabei ein Schlüssel, welcher speziell für die gegenwärtige Kommunikationssitzung zwischen ID-Token 100 und Terminal 118 Verwendung findet, also speziell für die aktuelle Kommunikation erzeugt wurde.

Nach Empfang des sitzungsgebundenen öffentlichen Schlüssels in Schritt 212 erfolgt in Schritt 214 das Erzeugen und Senden eines zufälligen ersten Geheimnisses vom ID-Token 100 an das Terminal 118. Dieses zufällige erste Geheimnis wird auch als "challenge" bezeichnet und dient daraufhin seitens des Terminals 118 dazu, eine Signatur zu erzeugen.

Das Terminal 118 verfügt ebenfalls über einen Prozessor 120 sowie einen Speicher 128. Im Speicher 128 sind Instruktionen 124 enthalten, welche es ermöglichen, die bezüglich des Terminals durchgeführten Schritte mittels des Prozessors auszuführen. Ebenfalls sind im Speicher 128 verschiedene Schlüsselpaare (Speicherbereich 126) gespeichert, beispielsweise der private und öffentliche Schlüssel des Terminals. Ferner sind im Speicher 128 die Zertifikate des Terminals gespeichert.

Nach dem in Schritt 214 der ID-Token das Geheimnis erzeugt und an das Terminal 118 gesendet hat, erzeugt daraufhin das Terminal eine Signatur unter Verwendung seines permanenten privaten Schlüssels, des temporären (sitzungsgebundenen) öffentlichen Schlüssels, sowie des Geheimnisses. Das Terminal übermittelt daraufhin die so erzeugte Signatur an den ID-Token 100, welcher in Schritt 216 die Signatur empfängt und verifiziert. Die Verifizierung der vom Terminal empfangenen Signatur erfolgt durch den ID-Token 100 unter Verwendung des Geheimnisses, des dem permanenten Zertifikat zugehörigen öffentlichen Schlüssels des Terminals und dem temporären (sitzungsgebundenen) öffentlichen Schlüssel des Terminals.

Im Falle einer erfolgreichen Verifizierung dieser (zweiten) Signatur erfolgt anschließend in Schritt 218 ein Speichern des in Schritt 202 abgeleiteten Hash-Wertes zusammen mit den Metadaten, und dem permanenten öffentlichen Schlüssels des Terminals und einem optionalen Zeitstempel im ID-Token 100.

Es sei angemerkt, dass die obig beschriebenen Schritte 206 bis 216 in dem Standardprotokoll zur Terminal-Authentisierung gemäß Richtlinie TR-03110 des BSI enthalten sind.

Nach Schritt 218 erfolgt schließlich die Freigabe des Zugriffs auf das Attribut 112 in Schritt 220.

Bevor jedoch diesbezüglich ein tatsächlicher Zugriff auf das Attribut erfolgt, wird in nachfolgenden Schritten noch eine zusätzliche ID-Token-Authentisierung, entsprechend Schritt 302 der Figur 3 durchgeführt. So sendet der ID-Token in Schritt 222 seinen öffentlichen Schlüssel und einen für elektrische Kurvenkryptografie notwendigen Domainparameter an das Terminal 118. Im Gegenzug hierzu übermittelt das Terminal seinen sitzungsgebundenen öffentlichen Schlüssel an den ID-Token. Dies ermöglicht es sowohl dem ID-Token als auch dem Terminal, ein zweites Geheimnis in Schritt 224 zu erzeugen. In diese Erzeugung des zweiten Geheimnisses gehen auf Seiten des ID-Tokens der private Schlüssel des ID-Tokens, der sitzungsgebundene öffentliche Schlüssel des Terminals und der Domainparameter ein. Auf Seiten des Terminals gehen in die Berechnungen des zweiten Geheimnisses der sitzungsgebundene geheime Schlüssel des Terminals, der öffentliche Schlüssel des IT-Tokens und der Domainparameter ein. Es wird also auf jeder Seite unabhängig voneinander das gleiche zweite Geheimnis erzeugt.

Nachdem nun also beide Seiten das gemeinsame zweite Geheimnis berechnet haben, erzeugt in Schritt 226 der ID-Token ein drittes Geheimnis in zufälliger Weise und leitet aus diesem dritten Geheimnis unter Verwendung des zweiten Geheimnisses in Schritt 230 einen Sitzungsschlüssel ab. Außerdem wird in Schritt 228 das dritte Geheimnis an das Terminal übermittelt. Das Terminal selbst kann unter Verwendung des dort berechneten zweiten Geheimnisses und des nun empfangenen dritten Geheimnisses ebenfalls den Sitzungsschlüssel erzeugen.

Anschließend erfolgt in Schritt 232 ein verschlüsselter Zugriff durch das Terminal auf das Attribut statt, wobei die Verschlüsselung unter Verwendung des (sitzungsgebundenen) Sitzungsschlüssels erfolgt.

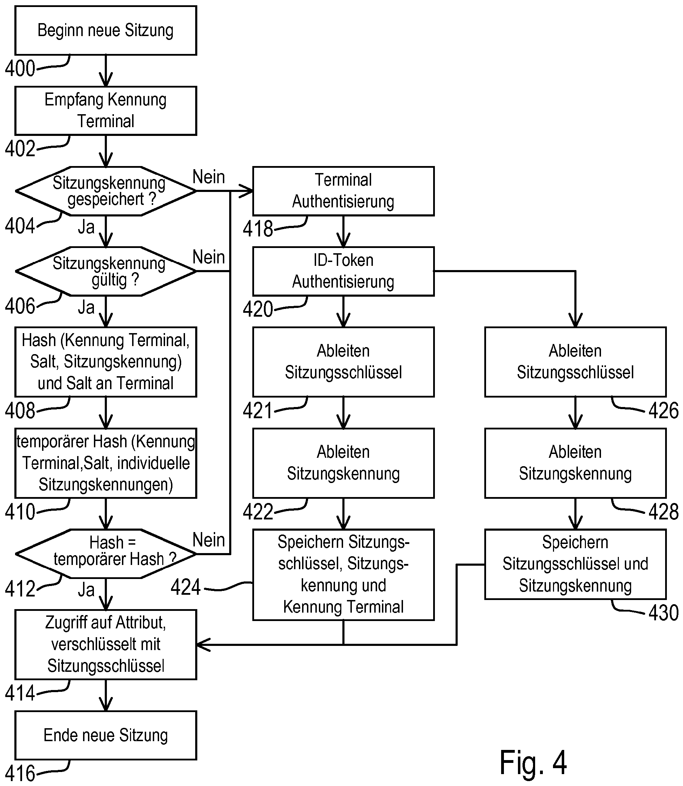

Wird nun der ID-Token in mehreren zeitlich auseinanderliegenden Sitzungen zum Zugriff auf das Sicherungsanlage verwendet, kann ein modifiziertes Verfahren zur Zugriffskontrolle des Terminals auf den ID-Token zum Einsatz kommen. Dieses Beginnt im Flussdiagramm der Figur 3 mit einem dem Schritt 300 vorgelagerten Schritt 290. In dem Flussdiagramm der Figur 4 entspricht dies den Schritten 400-412, welche im Folgenden näher erläutert werden sollen.

Es sei davon ausgegangen, dass in Schritt 400 eine neue Kommunikationssitzung zwischen Terminal und ID-Token beginnt. So könnte zwischen der ursprünglichen initialen Authentisierung der Schritte 300-304 inklusive Lesen Attributs einige Zeit vergangen sein. Z.B. könnte ein Benutzer des ID-Tokens zu einem späteren Zeitpunkt nochmaligen Zutritt zur Sicherungsanlage begehren.

Um nun das "Prüfverfahren", ob dem Benutzer Zutritt gewährt werden soll, zu beschleunigen, wird nach Empfang einer Kennung des Terminals in Schritt 402 durch den ID-Token zunächst überprüft, ob diese Kennung des Terminals bereits im ID-Token gespeichert wurde (Schritt 404). Wenn dies der Fall ist bedeutet dies, dass bereits zuvor einmal eine gegenseitige Authentisierung von Terminal und ID-Token erfolgreich durchgeführt wurde.

Daraufhin überprüft der ID-Token in Schritt 406, ob die Kennung des Terminals auch gültig gespeichert ist. Z.B. könnte die Kennung des Terminals mit einem zeitlichen Ablaufdatum versehen sein, woraufhin der ID-Token dieses Ablaufdatum mit der aktuellen Systemzeit vergleicht. Liegt das Ablaufdatum zeitlich vor der Systemzeit, ist die Sitzungskennung verfallen. In diesem Fall muss in Schritt 418 fortgefahren werden.

Ist hingegen das Ergebnis der Überprüfung von Schritt 406, dass die Sitzungskennung gültig ist, so wird in Schritt 408 ein Hash Wert aus der Kennung des Terminals, der Sitzungskennung und einem Salz erzeugt. Das Salz ist z.B. eine zufällig gewählte Zeichenfolge, welche die Entropie des Hash-Wertes erhöht. Dieser Hash-Wert wird daraufhin vom ID-Token an das Terminal zusammen mit dem Salz übermittelt.

In den Schritten 410 und 412 versucht das Terminal herauszufinden, zu welchem seiner lokal gespeicherten Sitzungskennungen der Hash-Wert zugehörig ist. Hierzu werden in Schritt 410 temporäre Hash-Werte für alle Sitzungskennungen individuell erzeugt, welche im Terminal gespeichert sind. Die Erzeugung erfolgt wiederum unter Verwendung der Kennung des Terminals und dem Salz. Mit Schritt 412 identifiziert dann das Terminal jenen temporären Hash-Wert, welcher dem zuvor empfangenen Hash-Wert entspricht. Die diesem identifizierten temporären Hash-Wert zugehörige Sitzungskennung ist dann jene Sitzungskennung, deren zugeordneter sitzungsgebundener Sitzungsschlüssel für die nachfolgende Kommunikation mit dem ID-Token verwendet wird (Schritt 414). Schritt 414 ist dabei mit Schritt 304 in Figur 3 identisch. Die Sitzung endet dann in Schritt 416.

Liegt also die Sitzungskennung gültig gespeichert in dem ID-Token vor, kann für die gegenwärtige Sitzung auf die aufwändige Durchführung der Schritte 300-302 verzichtet werden.

Liegt entweder keine Sitzungskennung zugehörig zur Kennung des Terminals im ID-Token gespeichert vor, oder aber ist die Sitzungskennung nicht gültig im ID-Token gespeichert, so setzt sich das Verfahren nach Schritt 404 bzw. 406 in Schritt 418 fort.

Schritt 418 entspricht in der Figur 2 z.B. den Schritten 200-220 und in Figur 3 dem Schritt 300.

Obig war bisher beschrieben, dass in Schritt 204 der Terminal-Hash-Wert nicht gültig in dem ID-Token gespeichert war. Dies führte zur Durchführung der nachfolgenden Schritte 206-218. Ist jedoch der Terminal Hash-Wert gültig in dem ID-Token gespeichert, bedeutet dies, dass der ID-Token in einer vorigen Sitzung das Terminal als vertrauenswürdig eingestuft hat. Damit entfällt die Durchführung der Schritte 206-218 und der ID-Token gewährt sofortigen Zugriff für das Terminal auf das Attribut in Schritt 220.

Nichtsdestotrotz muss nun noch die obig beschriebene ID-Token Authentisierung durchgeführt werden (Schritte 222-230 bzw. Schritt 420 bzw. Schritt 302). Aus der ID-Token Authentisierung resultiert in Schritt 230 ein Sitzungsschlüssel. Dieser resultiert sowohl auf Seiten des ID-Token (Block 426), als auch auf Seiten des Terminals (Block 421). Gemäß Richtlinie TR-03110 des BSI erzeugen ID-Token und Terminal den Sitzungsschlüssel jeweils für sich, der Schlüssel selbst wird nicht ausgetauscht.

In den Schritten 422 bzw. 428 leiten ID-Token bzw. Terminal ebenfalls vorzugsweise für sich eine geheime Sitzungskennung ab. In den Schritten 424 bzw. 430 speichern ID-Token bzw. Terminal den Sitzungsschlüssel und die Sitzungskennung miteinander verknüpft ab. Der ID-Token speichert darüber hinaus noch die Kennung des Terminals in Schritt 424 mit der Sitzungskennung verknüpft ab.

Dann kann das Terminal in Schritt 414 auf das Attribut im ID-Token zugreifen, wobei die hierfür verwendete Kommunikation verschlüsselt mit dem vorzugsweise symmetrischen Sitzungsschlüssel abläuft. In Schritt 416 endet die in Schritt 400 begonnene Sitzung.

Wird also der ID-Token in mehreren zeitlich auseinanderliegenden Sitzungen zum Zugriff auf das Sicherungsanlage verwendet, kann die beschriebene modifizierte Authentisierung des Terminals durch den ID-Token zum Einsatz kommen. Beispielsweise könnte bei einem erstmaligen Zugriff auf die Sicherungsanlage das Protokoll der Terminal-Authentisierung vollständig mit den besagten Schritten 206 bis 218 zum Einsatz kommen, wohingegen bei einem späteren Versuch, mittels des ID-Tokens 100 auf die Sicherungsanlage 144 Zugriff zu erlangen, die Authentisierung des Terminals in der besagten modifizierten Weise ablaufen könnte. Zusammengefasst ist vorgesehen, dass der ID-Token 100 nach Ableiten des Hash-Werts in Schritt 202 seinen Speicher 106 dahingehend überprüft, ob ein Terminal-Hash-Wert (Speicherbereich 114) aus einer früheren Authentisierung resultierend gespeichert ist. Ist dies der Fall, so wird anstatt mit dem Schritt 206 sofort mit dem Schritt 220 fortgefahren. Durch das "Cashen" des Terminal-Hash-Wertes in Schritt 218 kann also der ID-Token feststellen, dass in einem vorigen Authentisierungsversuch des Terminals gegenüber dem ID-Token der ID-Token das Terminal als vertrauenswürdig eingestuft hat.

Um nun nicht für alle Zeit die Vertrauenswürdigkeit des Terminals annehmen zu müssen, kann insbesondere der Hash-Wert zusammen mit einem Ablaufdatum oder einer Gültigkeitsdauer in dem ID-Token gespeichert werden. Der Hash-Wert wird also in dem ID-Token mit einem Zeitstempel verknüpft abgelegt. Der Zeitstempel könnte beispielsweise ein Ablaufdatum des Terminal-Hash-Wertes angeben. Ist dieses Ablaufdatum zeitlich unterschritten, so wird trotz des Vorhandenseins des Terminal-Hash-Werts (Speicherbereich 114) im Speicher 106 des IT-Tokens keine Gültigkeit mehr gegeben sein, sodass die Folge von Schritte 204 die erneute Durchführung der Authentisierung des Terminals mit den Schritten 206 bis 218 erfolgen muss.

Die Gültigkeitsdauer des ID-Tokens kann auch in einer Anzahl von zeitlich auseinanderliegenden Sitzungen festgelegt sein. Erst nach deren Erreichen dieser Anzahl von Sitzungen ist eine erneute vollständige Authentisierung notwendig.

Es sei an dieser Stelle angemerkt, dass sich der in Schritt 204 geprüfte Zeitstempel von dem in Schritt 406 geprüften Zeitstempel unterscheiden könnte.

Ebenfalls kann vorgesehen sein, dass zusammen mit dem Terminal-Hash-Wert jene Metadaten in dem Speicher 106 des IT-Tokens 100 gespeichert werden, welche zusammen mit dem permanenten Zertifikat des Terminals in Schritt 200 durch den ID-Token 100 entfallen werden. Gegebenenfalls kann auch nur ein Teil der Metadaten dort gespeichert werden. Die Metadaten können beispielsweise eine Zugriffsberechtigung angeben, bezüglich welches der im Speicher 106 befindlichen Attribute 112 das Terminal zugreifen möchte. Insofern könnten mit der Feststellung in Schritt 204, dass der Terminal-Hash-Wert gültig im ID-Token gespeichert ist, auch die mit dem Terminal-Hash-Wert verknüpft gespeicherten und zugehörigen Metadaten aus dem Speicher 106 ausgelesen werden. Diese Metadaten könnten dann für die weitere Kommunikation mit dem Terminal herangezogen werden. Neben Zugriffsberechtigungen können die Metadaten auch eine eindeutige ID des Terminals umfassen.

Weiter kann verknüpft mit dem Terminal-Hash-Wert der permanente öffentliche Schlüssel des Terminals im Speicher 106 gespeichert sein. Wird also festgestellt, dass der Hash-Wert im Schritt 204 gültig gespeichert ist, kann der mit dem Terminal-Hash-Wert verknüpft gespeicherte öffentliche Schlüssel gelesen und auch hier für die weitere Kommunikation mit dem Terminal verwendet werden.

Es sei an dieser Stelle angemerkt, dass im Rahmen der gesamten Beschreibung keine Unterscheidung getroffen wird zwischen Schlüsseln in komprimierter und unkomprimierter Form. Je nach Anforderung wird der Fachmann dazu in der Lage sein, mit komprimierten oder unkomprimierten Formen der genannten Schlüssel zu arbeiten. Dies betrifft insbesondere den sitzungsgebundenen Schlüssel des Terminals, welcher üblicherweise im Rahmen der Terminal-Authentisierung (Schritt 212) in komprimierter Form vom ID-Token empfangen und verarbeitet wird.

Der Authentisierungsserver 130 ist in der Lage, mit dem Terminal 118 über die Schnittstelle 134 und das Netzwerk 142 zu kommunizieren. Eine Kommunikation zwischen Terminal 118 und Authentisierungsserver 130 erfolgt unter Verwendung einer Verschlüsselung, sodass das Terminal eine Zugriffsanfrage bezüglich eines Zugriffs auf die Sicherungsanlage 144 an den Authentisierungsserver 130 richtet, wobei die Zugriffsanfrage das Attribut 112 in verschlüsselter Weise umfasst. Beispielsweise kann auch eine Ende-zu-Ende-Verschlüsselung zum Einsatz kommen.

Der Übersichtlichkeit halber sei nochmals grob das Verfahren zur Kontrolle des Zugriffs des Terminals das in dem ID-Token gespeicherten Attribut wie folgt zusammengefasst:
1. Überprüfung, ob zu der Kennung des Terminals gültig zugeordnet eine Sitzungskennung in dem ID-Token gespeichert ist. Wenn dies nicht der Fall ist, im Vergleich zur Richtlinie TR-03110 des BSI modifizierte Terminal-Authentisierung. Wenn gültige Zuordnung gegeben ist, direkter Zugriff auf das Attribut, wobei der Zugriff mit dem Sitzungsschlüssel verschlüsselt erfolgt.
2. Modifizierte Terminal-Authentisierung, bei welcher überprüft wird, ob der Terminal Hash-Wert in dem ID-Token gültig gespeichert ist. Wenn dies nicht der Fall ist, vollständige Terminal-Authentisierung gemäß Richtlinie TR-03110 des BSI mit nachfolgender ID-Token Authentisierung gemäß Richtlinie TR-03110 des BSI. Wenn gültige Speicherung gegeben ist, direkter Zugriff auf das Attribut, nachdem die ID-Token Authentisierung gemäß Richtlinie TR-03110 des BSI durchgeführt wurde, wobei der Zugriff mit dem Sitzungsschlüssel verschlüsselt erfolgt.

Um insgesamt die Zugriffsgeschwindigkeit des Terminals 118 auf das Attribut 112 noch weiter zu erhöhen, könnten verschiedene Optimierungen durchgeführt werden. So könnte beispielsweise darauf verzichtet werden, eine Referenz der Zertifizierungsstelle bezüglich des permanenten Zertifikats dem ID-Token 100 mitzuteilen. Wird stattdessen festgelegt, dass grundsätzlich eine einzige Zertifizierungsstelle hierzu zum Einsatz kommt, kann auf die Ankündigung der Referenz der Zertifizierungsstelle seitens des Terminals verzichtet werden und eine dementsprechend gegebenenfalls notwendige Anforderung derselben seitens des ID-Tokens entfällt ebenfalls. Damit wird auch das Volumen reduziert und damit die Datenübertragungsgeschwindigkeit insgesamt erhöht. Das MSE:Set DST-Kommando seitens des Terminals wird damit teilweise oder gar vollständig hinfällig.

Eine weitere Möglichkeit besteht darin, Schritt 214 mit Erzeugen und Senden des Geheimnisses automatisch durchzuführen, nachdem in Schritt 212 der sitzungsgebundene Schlüssel empfangen wurde. Schritt 214 erfolgt damit unmittelbar auf Schritt 212, ohne dass insbesondere ein Kommando der Art "Get Challenge" seitens des Terminals an den ID-Token übermittelt wurde.

Ein weiterer Geschwindigkeitsgewinn könnte darin liegen, dass im Rahmen der ID-Token-Authentisierung auf eine konkrete Anforderung durch das Terminal je nach Referenz des öffentlichen Schlüssels des ID-Tokens verzichtet wird, dessen Besitz durch den ID-Token bewiesen werden soll. Zum Beispiel könnte auf die Verwendung des MSE:Set AT-Kommandos seitens des Terminals vollständig verzichtet werden. Stattdessen sendet der ID-Token den öffentlichen Schlüssel und den zum öffentlichen Schlüssel zugehörigen Domainparameter automatisch an das Terminal, nachdem zum Beispiel Schritt 220 erfolgt ist bzw. allgemein, nachdem die Terminal-Authentisierung in Schritt 300 erfolgreich abgeschlossen wurde.

Verfügt der ID-Token über mehrere verschiedene öffentliche Schlüssel, so wird einer dieser Schlüssel im Voraus als Standard definiert und bei Ausbleiben einer expliziten Anforderung des Schlüssels seitens des Terminals wird der besagte Standardschlüssel verwendet und in Schritt 222 gesendet. Das automatische, ohne vorherige explizite Anforderung, Senden des öffentlichen Schlüssels und vorzugsweise ebenfalls des Domainparameters kann beispielsweise als Reaktion auf den Erhalt eines "General Authenticate" Kommandos des Terminals erfolgen.

Weitere Optimierungen könnten darin liegen, dass aus Sicherheitsgründen elliptische Kurven verwendet werden mit einem q, welcher mindestens eine Bitlänge von 224 Bits aufweist, um das Terminal-Zertifikat zu signieren und während der ID-Token-Authentisierung den symmetrischen Sitzungsschlüssel zu erzeugen. Ferner könnte die Anforderung an den symmetrischen Sitzungsschlüssel dahingehend gewählt werden, dass ein AES-128-Schlüssel zum Einsatz kommt.

Die obig beschriebenen Hash-Verfahren könnten unter Verwendung eines SAH-256-Hash-Algorithmus durchgeführt werden, zumal SAH-224 im Vergleich zu SAH-224 denselben Rechenaufwand zur Hash-Berechnung bei höherer Sicherheit aufweist.

Eine weitere Möglichkeit der Beschleunigung, insbesondere der Verifizierung des permanenten Zertifikats des Terminals durch den ID-Token könnte darin liegen, dass lediglich eine "Ein-Schritt-Hierarchie" bezüglich des Wurzelzertifikats zum Einsatz kommt. Es könnte also auf entsprechende Zwischenzertifikate verzichtet werden und insofern ist hier die Anforderung lediglich darin zu sehen, dass der ID-Token endlich ein einzelnes Wurzelzertifikat aufweist, um damit vollständig die Verifizierung des Zertifikats des Terminals durchzuführen.

Um weiter den Datenaustausch zwischen Terminal und ID-Token zu minimieren, könnte das permanente Zertifikat des Terminals ohne jegliche Zertifikatserweiterung (Certificate Extensions) versendet werden. Außerdem sollten die kleinsten X.509-Zertifikate bezüglich der Wurzelzertifizierungsstelle und der Zertifizierungsstelle zum Einsatz kommen, welche die Zertifikate des ID-Tokens signiert.

### Bezugszeichenliste

- 100: ID-Token
- 102: Prozessor
- 104: Schnittstelle
- 106: Speicher
- 108: Instruktionen
- 110: Schlüsselpaar
- 112: Attribut
- 114: Speicherbereich
- 116: Speicherbereich
- 118: Terminal
- 120: Prozessor
- 122: Schnittstelle
- 124: Instruktionen
- 126: Speicherbereich
- 128: Speicher
- 130: Authentisierungsserver
- 132: Prozessor
- 134: Schnittstelle
- 136: Instruktionen
- 138: Tabelle
- 140: Speicher
- 142: Netzwerk
- 144: Sicherungsanlage

## Patentansprüche

1. Computerimplementiertes Verfahren zur Kontrolle des Zugriffs eines Terminals (118) auf ein in einem ID-Token (100) gespeichertes Attribut (112), wobei der ID-Token (100) einem Nutzer zugeordnet ist, wobei das Verfahren zu Beginn einer neuen Kommunikationssitzung zwischen dem Terminal (118) und dem ID-Token (100) einen Empfang einer Kennung des Terminals (118) durch den ID-Token (100) und eine Überprüfung durch den ID-Token (100) umfasst, ob zu der Kennung des Terminals (118) gültig zugeordnet eine Sitzungskennung in dem ID-Token (100) gespeichert ist, wobei im Falle dessen zu der Kennung des Terminals (118) gültig zugeordnet die Sitzungskennung in dem ID-Token (100) gespeichert ist, der ID-Token (100) die Sitzungskennung an das Terminal (118) übermittelt zur Überprüfung, ob in dem Terminal ein der Sitzungskennung gültig zugeordneter sitzungsgebundener Sitzungsschlüssel zur Verschlüsslung einer nachfolgenden Kommunikation gespeichert ist, und eine Freigabe eines Zugriffs des Terminals (118) auf das Attribut (112) erfolgt, wobei die Freigabe des Zugriffs des Terminals (118) auf das Attribut (112) für die aktuelle Sitzung zwischen ID-Token (100) und Terminal (118) ohne einen weiteren Authentisierungsvorgang zwischen ID-Token (100) und Terminal (118) erfolgt und die weitere nachfolgende Kommunikation mit dem Zugriff auf das Attribut (112) verschlüsselt mit dem sitzungsgebundenen Sitzungsschlüssel erfolgt, wobei der sitzungsgebundene Sitzungsschlüssel zu der Sitzungskennung oder der Kennung des Terminals (118) zugeordnet im ID-Token (100) gespeichert ist, wobei im Falle dessen zu der Kennung des Terminals (118) gültig zugeordnet keine Sitzungskennung in dem ID-Token (100) gespeichert ist, das Verfahren umfasst:
- Authentisierung des Terminals (118) durch den ID-Token (100) und Authentisierung des ID-Tokens (100) gegenüber dem Terminal, wobei nach erfolgreicher Durchführung der Authentisierungen eine Freigabe des Zugriffs des Terminals (118) auf das Attribut (112) erfolgt,
- Ableiten eines sitzungsgebundenen Sitzungsschlüssels, wobei eine weitere nachfolgende Kommunikation mit dem Zugriff auf das Attribut (112) verschlüsselt mit einem sitzungsgebundenen Sitzungsschlüssel erfolgt,
- Ableiten einer Sitzungskennung,
- Speichern der Kennung des Terminals (118) zugeordnet zu der Sitzungskennung in dem ID-Token (100),
- Speichern des sitzungsgebundenen Sitzungsschlüssels zugeordnet zu der Kennung des Terminals (118) in dem ID-Token (100).

2. Verfahren nach Anspruch 1, wobei im Falle dessen zu der Kennung des Terminals (118) gültig zugeordnet die Sitzungskennung in dem ID-Token (100) gespeichert ist der ID-Token (100) ein Salz erzeugt und einen Hash-Wert aus der Kennung des Terminals (118), dem Salz und der Sitzungskennung erzeugt wird, wobei die Übermittlung der Sitzungskennung vom ID-Token (100) an das Terminal (118) in Form einer Übermittlung des Hash-Wertes zusammen mit dem Salz erfolgt.

3. Verfahren nach einem der vorigen Ansprüche, wobei durch den ID-Token (100)
- im Falle dessen zu der Kennung des Terminals (118) gültig zugeordnet keine Sitzungskennung in dem ID-Token (100) gespeichert ist bei der Authentisierung des Terminals (118) durch den ID-Token (100) Metadaten eines permanenten Zertifikats des Terminals (118) empfangen werden, wobei die Metadaten eine Zugriffsberechtigung umfassen, wobei nach erfolgreicher Durchführung der Authentisierungen in dem ID-Token (100) zugeordnet zu der Kennung des Terminals (118) zumindest die Zugriffsberechtigung gespeichert wird und die Freigabe des Zugriffs des Terminals (118) auf das Attribut (112) entsprechend der Zugriffsberechtigung erfolgt,
- im Falle dessen zu der Kennung des Terminals (118) gültig zugeordnet die Sitzungskennung in dem ID-Token (100) gespeichert ist die der Kennung des Terminal (118) zugeordnete Zugriffsberechtigung durch den ID-Token (100) gelesen wird, wobei die Freigabe des Zugriffs des Terminals (118) auf das Attribut (112) entsprechend der Zugriffsberechtigung erfolgt.

4. Verfahren nach einem der vorigen Ansprüche, wobei durch den ID-Token (100)
- im Falle dessen zu der Kennung des Terminals (118) gültig zugeordnet keine Sitzungskennung in dem ID-Token (100) gespeichert ist nach erfolgreicher Durchführung der Authentisierungen in dem ID-Token (100) zugeordnet zu der Kennung des Terminals (118) ein erster Zeitstempel gespeichert wird, wobei der erste Zeitstempel eine maximale Gültigkeitsdauer des sitzungsgebundenen Sitzungsschlüssels angibt,
- im Falle dessen zu der Kennung des Terminals (118) gültig zugeordnet die Sitzungskennung in dem ID-Token (100) gespeichert ist der der Kennung des Terminal (118) zugeordnete Zeitstempel gelesen wird und eine gültige Speicherung des sitzungsgebundenen Sitzungsschlüssels nur dann gegeben ist, wenn der erste Zeitstempel noch gültig ist.

5. Verfahren nach Anspruch 4, wobei die Metadaten den ersten Zeitstempel aufweisen.

6. Verfahren nach Anspruch 4, wobei der erste Zeitstempel für das Speichern des sitzungsgebundenen Sitzungsschlüssels in dem ID-Token (100) erzeugt wird, wobei der erste Zeitstempel auf Basis einer vordefinierten relativen Gültigkeitsdauer erzeugt wird.

7. Verfahren nach einem der vorigen Ansprüche, wobei die Authentisierung durch den ID-Token (100) den Empfang eines permanenten Zertifikats des Terminals (118), das Ableiten eines Terminal (118) Hash-Wertes aus dem Zertifikat und ein Überprüfen umfasst, ob der Terminal (118) Hash-Wert in dem ID-Token (100) gültig gespeichert ist, wobei im Falle dessen der Terminal (118) Hash-Wert in dem ID-Token (100) gültig gespeichert ist eine Freigabe des Zugriffs des Terminals (118) auf das Attribut (112) ohne eine weitere Überprüfung des permanenten Zertifikats des Terminals (118) erfolgt, wobei die Authentisierung durch den ID-Token (100) umfasst:
- Ableiten einer ersten Signatur aus dem permanenten Zertifikat des Terminals (118) und Verifizierung der ersten Signatur mit dem Terminal (118) Hash-Wert und einem dem permanenten Zertifikat zugehörigen öffentlichen Schlüssel des Terminals (118), wobei der Terminal-Hash Wert einen Hash der Metadaten des Zertifikats umfasst,
- Empfang eines sitzungsgebundenen öffentlichen Schlüssels des Terminals (118),
- Erzeugung und Senden eines zufälligen ersten Geheimnisses an das Terminal,
- Empfang einer zweiten Signatur von dem Terminal (118) und Verifizierung der zweiten Signatur unter Verwendung des sitzungsgebundenen öffentlichen Schlüssels des Terminals (118), des zufälligen ersten Geheimnisses und dem dem permanenten Zertifikat zugehörigen öffentlichen Schlüssel des Terminals (118),
- Nach erfolgreicher Verifizierung der ersten und zweiten Signatur, Speichern des Terminal (118) Hash-Wertes in dem ID-Token (100).

8. Verfahren nach Anspruch 7, wobei der permanente öffentliche Schlüssel des Terminals (118) in dem permanenten Zertifikat enthalten ist, wobei der Terminal-Hash Wert einen Hash des permanenten öffentlichen Schlüssels umfasst.

9. Verfahren nach einem der vorigen Ansprüche 7-8, wobei durch den ID-Token (100)
- im Falle dessen der Terminal (118) Hash-Wert in dem ID-Token (100) nicht gültig gespeichert ist nach der erfolgreichen Verifizierung der ersten und zweiten Signatur der permanente öffentliche Schlüssel verknüpft mit einem zweiten Zeitstempel in dem ID-Token (100) gespeichert wird, wobei der zweite Zeitstempel eine maximale Gültigkeitsdauer des Terminal (118) Hash-Werts angibt,
- im Falle dessen der Terminal (118) Hash-Wert in dem ID-Token (100) gespeichert ist der mit dem Terminal (118) Hash-Wert verknüpft gespeicherte zweite Zeitstempel gelesen wird und eine gültige Speicherung des Terminal (118) Hash-Werts nur dann gegeben ist, wenn der zweite Zeitstempel noch gültig ist.

10. ID-Token (100) mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens nach einem der vorigen Ansprüche bewirken.

11. Verfahren zur Freigabe eines Zugriffs auf eine zugriffsbeschränkte Sicherungsanlage mittels eines ID-Tokens (100) nach Anspruch 10, wobei das Verfahren umfasst:
- Durchführung des Verfahrens nach einem der vorigen Ansprüche 1-9 durch den ID-Token (100),
- Nach Freigabe des Zugriffs des Terminals (118) auf das Attribut (112), lesen des Attributs (112) durch das Terminal (118) und versenden einer Zugriffsanfrage an einen Authentifizierungsserver, wobei die Zugriffsanfrage das Attribut (112) verschlüsselt umfasst,
- Entschlüsselung und Überprüfung des Attributs (112) durch den Authentifizierungsserver, wobei der Authentifizierungsserver im Fall einer erfolgreichen Überprüfung den Zugriff auf die Sicherungsanlage freigibt.

12. Sicherheitssystem umfassend einen ID-Token (100) nach Anspruch 10, sowie eine zugriffsbeschränkte Sicherungsanlage, ein Terminal (118) und einen Authentifizierungsserver,
- wobei das Terminal (118) dazu ausgebildet ist, nach Freigabe des Zugriffs des Terminals (118) auf das Attribut (112), das Attribut (112) zu lesen und eine Zugriffsanfrage an den Authentifizierungsserver zu versenden, wobei die Zugriffsanfrage das Attribut (112) verschlüsselt umfasst,
- wobei der Authentifizierungsserver dazu ausgebildet ist, eine Entschlüsselung und Überprüfung des Attributs (112) durchzuführen und im Fall einer erfolgreichen Überprüfung den Zugriff auf die Sicherungsanlage freizugeben.

13. Computerimplementiertes Verfahren zur Kontrolle des Zugriffs eines Terminals (118) auf ein in einem ID-Token (100) gespeicherten Attribut (112), wobei der ID-Token (100) einem Nutzer zugeordnet ist, wobei das Verfahren zu Beginn einer neuen Kommunikationssitzung zwischen dem Terminal (118) und dem ID-Token (100) das Senden einer Kennung des Terminals (118) durch das Terminal (118) an den ID-Token (100) umfasst, wobei im Falle dessen der ID-Token (100) auf das Senden mit der Übermittlung einer Sitzungskennung an das Terminal (118) antwortet das Terminal (118) überprüft, ob in dem Terminal (118) zu der Sitzungskennung ein sitzungsgebundener Sitzungsschlüssel gültig zugeordnet gespeichert ist, wobei im Falle dessen zu der Sitzungskennung der sitzungsgebundene Sitzungsschlüssel gültig zugeordnet gespeichert ist ein Zugriff des Terminals (118) auf das Attribut (112) für die aktuelle Sitzung zwischen ID-Token (100) und Terminal (118) ohne einen weiteren Authentisierungsvorgang zwischen ID-Token (100) und Terminal (118) erfolgt, wobei der Zugriff mittels einer Kommunikation des Terminals (118) mit dem ID-Token (100) verschlüsselt mit dem sitzungsgebundenen Sitzungsschlüssel erfolgt, wobei im Falle dessen zu der Sitzungskennung
kein sitzungsgebundener Sitzungsschlüssel gültig zugeordnet ist das Verfahren umfasst:
- Authentisierung des Terminals (118) gegenüber dem ID-Token (100) und Authentisierung des ID-Tokens (100) durch das Terminal,
- nach erfolgreicher Durchführung der Authentisierungen Ableiten eines sitzungsgebundenen Sitzungsschlüssels, wobei eine weitere nachfolgende Kommunikation mit dem Zugriff auf das Attribut (112) verschlüsselt mit einem sitzungsgebundenen Sitzungsschlüssel erfolgt,
- Ableiten einer Sitzungskennung,
- Speichern des sitzungsgebundenen Sitzungsschlüssels zugeordnet zu der Sitzungskennung in dem Terminal.

14. Verfahren nach Anspruch 13, wobei die Sitzungskennung in Form eines Hash-Wertes zusammen mit einem Salz durch das Terminal (118) von dem ID-Token (100) empfangen wird, wobei das Terminal
- für alle im Terminal (118) gespeicherten Sitzungskennungen jeweils mit dem Salz und der Kennung des Terminals (118) einen temporären Hash-Wert erzeugt,
- die temporären Hash-Werte mit dem empfangenen Hash-Wert vergleicht und im Fall einer Übereinstimmung einer der Hash-Werte die diesem Hash-Wert zugehörige Sitzungskennung als jene Sitzungskennung verwendet, für welche die Überprüfung stattfindet, ob ein sitzungsgebundener Sitzungsschlüssel gültig zugeordnet gespeichert ist.

15. Terminal (118) mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens nach einem der vorigen Ansprüche 13-14 bewirken.

## Claims

1. A computer-implemented method for controlling access of a terminal (118) to an attribute (112) stored in an ID token (100), wherein the ID token (100) is associated with a user, wherein the method, at the start of a new communication session between the terminal (118) and the ID token (100), comprises receipt of an identification of the terminal (118) by the ID token (100) and checking by the ID token (100) if a session identification validly associated with the identification of the terminal (118) is stored in the ID token (100), wherein, if a session identification validly associated with the identification of the terminal (118) is stored in the ID token (100), the ID token (100) transmits the session identification to the terminal (118) to check if a session-specific session key validly associated with the session identification for encrypting a subsequent communication is stored in the terminal and grants the terminal (118) access to the attribute (112), wherein the terminal (118) is granted access to the attribute (112) for the current session between ID token (100) and terminal (118) without a further authentication process between ID token (100) and terminal (118) and the further subsequent communication with access to the attribute (112) is carried out in an encrypted manner using the session-specific session key, wherein the session-specific session key is stored in the ID token (100) in a manner associated with the session identification or the identification of the terminal (118), wherein, if no session identification validly associated with the identification of the terminal (118) is stored in the ID token (100), the method comprises the following steps:
- authenticating the terminal (118) by the ID token (100) and authenticating the ID token (100) to the terminal, wherein, following successful authentications, the terminal (118) is granted access to the attribute (112),
- deriving a session-specific session key, wherein a subsequent communication with access to the attribute (112) is carried out in an encrypted manner using a session-specific session key,
- deriving a session identification,
- storing, in the ID token (100), the identification of the terminal (118) associated with the session identification,
- storing, in the ID token (100), the session-specific session key associated with the identification of the terminal (118).

2. The method according to claim 1, wherein, if a session identification validly associated with the identification of the terminal (118) is stored in the ID token (100), a salt is generated by the ID token (100) and a hash value is generated from the identification of the terminal (118), the salt, and the session identification, wherein the session identification is transmitted from the ID token (100) to the terminal (118) in the form of a transmission of the hash value together with the salt.

3. The method according to one of the preceding claims, wherein, by the ID token (100),
- if there is no session identification validly associated with the identification of the terminal (118) stored in the ID token (100), metadata of a permanent certificate of the terminal (118) are received by the ID token (100) at the time of authentication of the terminal (118), wherein the metadata comprise an access authorisation, wherein, following successful completion of the authentications, at least the access authorisation is stored in the ID token (100) in a manner associated with the identification of the terminal (118), and access of the terminal (118) to the attribute (112) is granted in accordance with the access authorisation,
- if there is a session identification validly associated with the identification of the terminal (118) stored in the ID token (100), the access authorisation associated with the identification of the terminal (118) is read by the ID token (100), wherein access of the terminal (118) to the attribute (112) is granted in accordance with the access authorisation.

4. The method according to any one of the preceding claims, wherein, by the ID token (100),
- if there is no session identification validly associated with the identification of the terminal (118) stored in the ID token (100), a first timestamp is stored in the ID token (100) in a manner associated with the identification of the terminal (118) following successful completion of the authentications, wherein the first timestamp specifies a maximum period of validity of the session-specific session key,
- if there is a session identification validly associated with the identification of the terminal (118) stored in the ID token (100), the timestamp associated with the identification of the terminal (118) is read, and the session-specific session key is deemed to be validly stored only if the first timestamp is still valid.

5. The method according to claim 4, wherein the metadata comprise the first timestamp.

6. The method according to claim 4, wherein the first timestamp is generated for storing the session-specific session key in the ID token (100), wherein the first timestamp is generated on the basis of a predefined relative period of validity.

7. The method according to any one of the preceding claims, wherein the authentication by the ID token (100) comprises the receipt of a permanent certificate of the terminal (118), the deriving of a terminal (118) hash value from the certificate, and a checking as to whether the terminal (118) hash value is validly stored in the ID token (100), wherein, if the terminal (118) hash value is validly stored in the ID token (100), access of the terminal (118) to the attribute (112) is granted without further checking of the permanent certificate of the terminal (118), wherein the authentication by the ID token (100) comprises the following steps:
- deriving a first signature from the permanent certificate of the terminal (118) and verifying the first signature with the terminal (118) hash value and a public key of the terminal (118) associated with the permanent certificate, wherein the terminal hash value comprises a hash of the metadata of the certificate,
- receiving a session-specific public key of the terminal (118),
- generating and sending a random first secret to the terminal,
- receiving a second signature from the terminal (118) and verifying the second signature with use of the session-specific public key of the terminal (118), the random first secret, and the public key of the terminal (118) associated with the permanent certificate,
- following successful verification of the first and second signature, storing the terminal (118) hash value in the ID token (100).

8. The method according to claim 7, wherein the permanent public key of the terminal (118) is contained in the permanent certificate, wherein the terminal hash value comprises a hash of the permanent public key.

9. The method according to one of preceding claims 7-8, wherein, by the ID token (100),
- if the terminal (118) hash value is not validly stored in the ID token (100), following the successful verification of the first and second signature, the permanent public key is stored in the ID token (100) in a manner linked to a second timestamp, wherein the second timestamp specifies a maximum period of validity of the terminal (118) hash value,
- if the terminal (118) hash value is stored in the ID token (100), the second timestamp stored in a manner linked to the terminal (118) hash value is read and the terminal (118) hash value is deemed to be validly stored only if the second timestamp is still valid.

10. An ID token (100) comprising a communication interface, a processor, and a computer-readable storage medium, wherein the storage medium contains computer-readable instructions which, when run by the processor, prompt the execution of a method according to any one of the preceding claims.

11. A method for granting access to an access-restricted security facility by means of an ID token (100) according to claim 10, wherein the method comprises the following steps:
- performing the method according to any one of preceding claims 1-9 by the ID token (100),
- following the granting of the access of the terminal (118) to the attribute (112), reading the attribute (112) by the terminal (118) and sending an access request to an authentication server, wherein the access request comprises the attribute (112) in encrypted form, and
- decrypting and checking the attribute (112) by the authentication server, wherein the authentication server grants access to the security facility in the event of a successful check.

12. A security system comprising an ID token (100) according to claim 10 and an access-restricted security facility, a terminal (118), and an authentication server,
- wherein the terminal (118) is configured, following a granting of access of the terminal (118) to the attribute (112), to read the attribute (112) and to send an access request to the authentication server, wherein the access request comprises the attribute (112) in encrypted form; and
- wherein the authentication server is configured to perform a decryption and check the attribute (112) and to grant the access to the security facility in the event of a successful check.

13. A computer-implemented method for controlling access of a terminal (118) to an attribute (112) stored in an ID token (100), wherein the ID token (100) is associated with a user, wherein the method, at the start of a new communication session between the terminal (118) and the ID token (100), comprises sending of an identification of the terminal (118) by the terminal (118) to the ID token (100), wherein, if the ID token (100) responds to the sending of the identification with the transmission of a session identification to the terminal (118), the terminal (118) checks whether a session-specific session key validly associated with the session identification is stored in the terminal (118), wherein, if a session-specific session key validly associated with the session identification is stored, access of the terminal (118) to the attribute (112) is granted for the current session between ID token (100) and terminal (118) without a further authentication process between ID token (100) and terminal (118), wherein the access is carried out by means of a communication of the terminal (118) with the ID token (100) in an encrypted manner using the session-specific session key, wherein, if there is no session-specific session key validly associated with the session identification, the method comprises the following steps:
- authenticating the terminal (118) to the ID token (100) and authenticating the ID token (100) to the terminal,
- following successful authentications, deriving a session-specific session key, wherein a further subsequent communication with access to the attribute (112) is carried out in an encrypted manner using a session-specific session key,
- deriving a session identification,
- storing, in the terminal, the session-specific session key associated with session identification.

14. The method according to claim 13, wherein the session identification is received by the terminal (118) from the ID token (100) in the form of a hash value together with a salt, wherein the terminal
- generates a temporary hash value for all session identifications stored in the terminal (118), in each case with the salt and the identification of the terminal (118),
- compares the temporary hash values with the received hash value and, if one of the hash values matches, uses the session identification associated with this hash value as the session identification for which a check is performed in order to ascertain whether a session-specific session key is stored in a validly associated manner.

15. A terminal (118), comprising a communication interface, a processor, and a computer-readable storage medium, wherein the storage medium contains computer-readable instructions which, when run by the processor, cause a method according to one of preceding claims 13-14 to be performed.

## Revendications

1. Procédé mis en œuvre par ordinateur pour le contrôle d'accès d'un terminal (118) à un attribut (112) stocké dans un jeton d'identification ID (100), dans lequel le jeton d'ID (100) est associé à un utilisateur, où le procédé comprend, au début d'une nouvelle session de communication entre le terminal (118) et le jeton d'ID (100), la réception d'une identification du terminal (118) par le jeton d'ID et la vérification par le jeton d'ID (100) si une identification de session associée de manière valide à l'identification du terminal (118) est stockée dans le jeton d'ID (100), où, dans le cas où l'identification de session est stockée associée de manière valide à l'identification du terminal (118) dans le jeton d'ID (100), le jeton d'ID (100) transmet l'identification de session au terminal (118) pour la vérification si, dans le terminal, une clé de session relative à la session associée de manière valide à l'identification de session est stockée pour le chiffrement d'une communication ultérieure, et une libération de l'accès du terminal (118) à l'attribut (112) a lieu, où la libération de l'accès du terminal (118) à l'attribut (112) a lieu pour la session en cours entre le jeton d'ID (100) et le terminal (118) sans autre processus d'authentification entre le jeton d'ID (100) et le terminal (118), et la nouvelle communication suivante est chiffrée avec l'accès à l'attribut (112) avec la clé de session relative à la session, où la clé de session relative à la session est stockée avec l'identifiant de session ou l'identifiant du terminal (118) associés dans le jeton d'ID (100), où, dans le cas où aucun identifiant de session associé de manière valide à l'identification du terminal (118) n'est stocké dans le jeton d'ID (100), le procédé comprend :
- l'authentification du terminal (118) par le jeton d'ID (100) et l'authentification du jeton d'ID (100) vis-à-vis du terminal, où, après l'exécution réussie de l'authentification, une libération de l'accès du terminal (118) à l'attribut (112) a lieu,
- la dérivation d'une clé de session relative à la session, où une nouvelle communication suivante a lieu avec l'accès à l'attribut (112) de manière chiffrée avec la clé de session relative à la session,
- la dérivation d'une identification de session,
- le stockage de l'identification du terminal (118) associée à l'identification de session dans le jeton d'ID (100),
- le stockage de la clé de session relative à la session associée à l'identification du terminal (118) dans le jeton d'ID (100).

2. Procédé selon la revendication 1, dans lequel, dans le cas où, l'identification de session est stockée dans le jeton d'ID (100) en association valide avec l'identification du terminal (118), le jeton d'ID (100) génère un sel et une valeur de hachage est générée à partir de l'identification du terminal (118), du sel et de l'identification de session, où la transmission de l'identification de session a lieu par le jeton d'ID (100) vers le terminal (118) sous la forme d'une transmission conjointe de la valeur de hachage et du sel.

3. Procédé selon l'une des revendications précédentes, dans lequel, par le jeton d'ID (100),
- dans le cas où aucune identification de session associée valide avec l'identification du terminal (118) n'est stockée dans le jeton d'ID (100), des métadonnées d'un certificat permanent du terminal (118) sont reçues par le jeton d'ID (100) lors de l'authentification du terminal (118), où les métadonnées comprennent une autorisation d'accès, où, après une exécution réussie des authentifications, au moins l'autorisation d'accès est stockée dans le jeton d'ID (100) associée avec l'identification du terminal (118) et la libération de l'accès du terminal (118) à l'attribut (112) a leu de manière conforme à l'autorisation d'accès,
- dans le cas où l'identification de session associée valide avec l'identification du terminal (118) est stockée dans le jeton d'ID (100), l'autorisation d'accès associée à l'identification du terminal (118) est lue par le jeton d'ID (118), où la libération de l'accès du terminal (118) à l'attribut (112) a lieu de manière conforme à l'autorisation d'accès.

4. Procédé selon l'une des revendications précédentes, dans lequel, par le jeton d'ID (100),
- dans le cas où aucune identification de session associée valide avec l'identification du terminal (118) n'est stockée dans le jeton d'ID (100), une première empreinte temporelle est stockée associée à l'identification du terminal (118) dans le jeton d'ID (100) après une exécution réussie des authentifications, où la première empreinte temporelle indique une durée de validité maximale de la clé de session relative à la session,
- dans le cas où l'identification de session associée valide avec l'identification du terminal (118) est stockée dans le jeton d'ID (100), l'empreinte temporelle associée à l'identification du terminal (118) est lue et un stockage valide de la clé de session relative à la session n'est indiqué que lorsque la première empreinte temporelle est encore valide.

5. Procédé selon la revendication 4, dans lequel les métadonnées présentent la première empreinte temporelle.

6. Procédé selon la revendication 4, dans lequel la première empreinte temporelle est créée pour le stockage de la clé de session relative à la session dans le jeton d'ID (100), où la première empreinte temporelle est créée sur la base d'une durée de validité relative prédéfinie.

7. Procédé selon l'une des revendications précédentes, dans lequel l'authentification comprend, par le jeton d'ID (100), la réception d'un certificat permanent du terminal (118), la dérivation d'une valeur de hachage d'un terminal (118) à partir du certificat et une vérification que la valeur de hachage du Terminal (118) est stockée valide dans le jeton d'ID (100), où, dans le cas où la valeur de hachage du terminal (118) est stockée valide dans le jeton d'ID (100), une libération de l'accès du terminal (118) à l'attribut (112) a lieu sans autre vérification du certificat permanent du terminal (118), où l'authentification par le jeton d'ID (100) comprend :
- la dérivation d'une première signature à partir du certificat permanent du terminal (118) et la vérification de la première signature avec la valeur de hachage du terminal (118) et d'une clé publique du terminal (118) correspondant au certificat permanent, où la valeur de hachage du terminal comprend un hachage des métadonnées du certificat,
- la réception d'une clé publique du terminal (118) relative à la session,
- la création et l'envoi d'un premier secret aléatoire au terminal,
- la réception d'une deuxième signature du terminal (118) et la vérification de la deuxième signature moyennant l'emploi de la clé publique du terminal (118) relative à la session, du premier secret aléatoire et de la clé publique du terminal (118) correspondant au certificat permanent,
- après la vérification réussie des première et deuxième signatures, le stockage de la valeur de hachage du terminal (118) dans le jeton d'ID (100).

8. Procédé selon la revendication 7, dans lequel la clé publique permanente du terminal (118) est contenue dans le certificat permanent, où la valeur de hachage du terminal comprend un hachage de la clé publique permanente.

9. Procédé selon l'une des revendications 7 et 8, dans lequel, par le jeton d'ID (100),
- dans le cas où la valeur de hachage du terminal (118) est stockée comme non valide dans le jeton d'ID (100), après la vérification réussie des première et deuxième signatures, la clé publique permanente est stockée dans le jeton d'ID (100) rattachée avec une deuxième empreinte temporelle, où la deuxième empreinte temporelle indique une durée de validité maximale de la valeur de hachage du terminal (118),
- dans le cas où la valeur de hachage du terminal (118) est stockée dans le jeton d'ID (100), la deuxième empreinte temporelle stockée rattachée à la valeur de hachage du terminal (118) est lue et un stockage valide de la valeur de hachage du terminal (118) n'est indiqué que si la deuxième empreinte temporelle est encore valide.

10. Jeton d'ID (100) doté d'une interface de communication, d'un processeur et d'un support de stockage lisible par ordinateur, dans lequel le support de stockage contient des instructions lisibles par ordinateur, lesquelles, lors de l'exécution par le processeur, provoquent l'exécution d'un procédé selon l'une des revendications précédentes.

11. Procédé de libération d'un accès à une installation de sécurité à accès restreint au moyen d'un jeton d'ID (100) selon la revendication 10, où le procédé comprend :
- l'exécution du procédé selon l'une des revendications précédentes par le jeton d'ID (100),
- après la libération de l'accès du terminal (118) à l'attribut (112), la lecture de l'attribut (112) par le terminal (118) et l'envoi d'une demande d'accès à un serveur d'authentification, la demande d'accès comprenant l'attribut (112) à l'état chiffré,
- le déchiffrement et la vérification de l'attribut (112) par le serveur d'authentification, où le serveur d'authentification, dans le cas d'une vérification réussie, libère l'accès à l'installation de sécurité.

12. Système de sécurité comprenant un jeton d'ID (100) selon la revendication 10, ainsi qu'installation de sécurité à accès restreint, terminal (118) et serveur d'authentification,
- dans lequel le terminal (118) est conçu pour, après la libération de l'accès du terminal (118) à l'attribut (112), lire l'attribut (112) et envoyer une demande d'accès au serveur d'authentification, la demande d'accès comprenant l'attribut (112) à l'état chiffré,
- dans lequel le serveur d'authentification est conçu pour exécuter un déchiffrement et une vérification de l'attribut (112) et dans le cas d'une vérification réussie, libérer l'accès à l'installation de sécurité.

13. Procédé mis en œuvre par ordinateur pour le contrôle de l'accès d'un terminal (118) à un attribut (112) stocké dans un jeton d'identification ID (100), dans lequel le jeton d'ID (100) est associé à un utilisateur, où le procédé comprend, au début d'une nouvelle session de communication entre le terminal (118) et le jeton d'ID (100), l'envoi d'une identification du terminal (118) au jeton d'ID (100) par le terminal (118), où, dans le cas où le jeton d'ID (100) répond à l'envoi avec la transmission d'une identification de session au terminal (118), le terminal (118) vérifie si une clé de session relative à la session est stockée associée de manière valide à l'identification du terminal (118) est stockée dans le terminal (118), où, dans le cas où la clé de session relative à la session est associée de manière valide à l'identification de session, un accès du terminal (118) à l'attribut (112) pour la session en cours a lieu entre le jeton d'ID (100) et le terminal (118) sans autre processus d'authentification entre le jeton d'ID (100) et le terminal (118), où l'accès a lieu au moyen d'une communication du terminal (118) chiffrée avec le jeton d'ID (100) avec la clé de session relative à la session,
où, dans le cas où aucune clé de session relative à la session n'est associée de manière valide à l'identification de session, le procédé comprend :
- l'authentification du terminal (118) vis-à-vis du jeton d'ID (100) et l'authentification du jeton d'ID (100) par le terminal,
- après l'exécution réussie de l'authentification, la dérivation d'une clé de session relative à la session, où une nouvelle communication suivante a lieu avec l'accès à l'attribut (112) de manière chiffrée avec une clé de session relative à la session,
- la dérivation d'une identification de session,
- le stockage de la clé de session relative à la session associée à l'identification de session dans le terminal.

14. Procédé selon la revendication 13, dans lequel l'identification de session est reçue sous forme d'une valeur de hachage conjointement avec un sel par le terminal (118) à partir du jeton d'ID (100), où le terminal,
- pour toutes les identifications de sessions stockées dans le terminal (118), génère respectivement une valeur de hachage temporaire avec le sel et l'identification du terminal (118),
- les valeurs de hachage temporaires sont comparées avec la valeur de hachage reçue et dans le cas d'une concordance d'une des valeurs de hachage, emploie l'identification de session correspondant à cette valeur de hachage comme identification de session pour laquelle la vérification a lieu si une clé de session relative à la session associée valide est stockée.

15. Terminal (118) doté d'une interface de communication, d'un processeur et d'un support de stockage lisible par ordinateur, dans lequel le support de stockage contient des instructions lisibles par ordinateur, lesquelles, lors de l'exécution par le processeur, provoquent l'exécution d'un procédé selon l'une des revendications précédentes 13 et 14.
